# EUROPÄISCHE PATENTSCHRIFT

(11) **EP 1 973 208 B1**
(45) Veröffentlichungstag und Bekanntmachung des Hinweises auf die Patenterteilung: **11.05.2011**
(21) Anmeldenummer: 08102675.9
(22) Anmeldetag: 17.03.2008
(51) Int. Cl.: H02B 15/00, H01H 23/14

(54) **Verfahren zum Bedienen und Programmieren von Schaltern, insbesondere von Lichtschaltern**
Method for operating and programming switches, in particular light switches
Procédé de commande et de programmation de commutateurs, en particulier d'interrupteurs de lumière

(30) Priorität: 17.03.2007 DE 102007012883; 20.07.2007 DE 102007034011
(43) Veröffentlichungstag der Anmeldung: 24.09.2008
(73) Patentinhaber: Aizo AG, 35578 Wetzlar (DE); Beck, Wilfried, 35578 Wetzlar (DE); Hoverstadt, Ludger, 35578 Wetzlar (DE); Hofmann, Christoph, 35578 Wetzlar (DE)
(72) Erfinder: Beck, Wilfried, 65191 Wiesbaden (DE); Hofmann, Christoph, 35578, Wetzlar (DE); Hoverstadt, Ludger, 35578, Wetzlar (DE)
(74) Vertreter: Aue, Hans-Peter

(56) Entgegenhaltungen:
- EP-A- 0 009 249
- EP-A- 0 896 264
- EP-A- 1 560 102
- EP-A- 1 640 902
- DE-A1- 4 106 033
- DE-A1- 4 423 839
- DE-A1- 10 001 253
- DE-A1- 10 021 895
- DE-A1-102004 035 321
- DE-U1- 9 112 055
- DE-U1- 29 909 153
- US-A1- 2001 043 189
- US-A1- 2006 250 745

## Beschreibung

Herkömmliche Schalter, wie beispielsweise Lichtschalter, Hausgeräteschalter, Stromschalter etc. werden durch ein einfaches Betätigen eines einzigen Bedienelements, beispielsweise durch Umlegen eines Wippschalters, Drehen eines Drehschalters bzw. Drücken eines Tastschalters/Tippschalters betätigt. Gemeinsam haben diese Schalter, daß sie eine einzige Stromleitung zu schalten in der Lage sind.
Durch die Betätigung des Bedienelements wird mit Hilfe des Schalters in der einzigen Zuleitung ein Stromkreis geschlossen, der einen oder mehrere an genau dieser Zuleitung verbundene Verbraucher, wie z.B. Beleuchtungsmittel mit Strom versorgt.

Inzwischen sind, beispielsweise durch die DE102004035321, auch Schalter bekannt, welche in einem Gehäuse ein einziges Betätigungselement umfassen, mit dessen Hilfe jedoch zwei oder sogar drei Zuleitungen geschalten werden können, wobei an jeder dieser zwei oder drei Zuleitungen mindestens ein Verbraucher angeschlossen ist. Darin wird vorgeschlagen, eine erste zweite und dritte Zuleitung mit Verbrauchern an einen Wippschalter anzuschließen, der nach links/rechts umlegbar ist, nach oben/unten umlegbar ist, oder durch Drücken in das Zentrum einen Stromkreis schließt.

All diese Lichtschalter weisen den Nachteil auf, daß die Anzahl der Stromleitungen mit der Anzahl der in einem einzigen Schalter integrierten Durchschaltmöglichkeiten begrenzt ist. So benötigt man pro zu schaltender Stromleitung eine Bediendimension des Schalters, wodurch die Anzahl der zu schaltenden Leitungen und damit zwangsläufig auch die Anzahl und die Auswahl der schaltbaren Verbraucher auf die an die zu schaltende Stromleitung angeschlossenen Verbraucher naturgemäß begrenzt ist.

Weiterhin sind aus der DE 44 23 839 ein Eingabegerät für ein Installationsbussystem, wobei das Eingabegerät für Mehrfach-Eingabefunktionen eingerichtet ist und wobei Anzeigen und/oder Tastenfunktionen durch ein im Eingabegerät speicherbares Programm und/oder durch Signale aus dem Installationsbussystem einstellbar sind. Zwar wird darin eine programmierbare Bedienoberfläche beschrieben, die eine Zuordnung unterschiedlicher Funktionen zu Tastpunkten und änderbare Anzeigen ermöglicht, wobei zwar beschrieben wird, dass die Anzeige änderbar ist, wobei offen bliebt, welche Verbraucher durch die jeweilige Anzeige repräsentiert werden und wobei offen bleibt, ob die durch die Anzeige repräsentierten Verbraucher beliebig zusammenstellbar sind, oder fest vordefiniert sind. Das gleiche gilt für die Zustände der Verbraucher. Weiterhin schweigt sich die DE 44 23 839 darüber aus, auf welche Weise bzw. mit welcher Bediensequenz Verbraucher bzw. Verbrauchergruppen festlegbar sind.

Dokument DE 4 106 033 offenbart ein Verfahren gemäß dem Oberbegriff des Anspruchs 1.

Es ist daher Aufgabe der vorliegenden Erfindung ein Verfahren bereitzustellen, mit dessen Hilfe Schalter, insbesondere Schalter im Haushalt, wie z.B. Geräteschalter, bzw., Lichtschalter bedient werden können, die zahlenmäßig weniger Zuleitungen zum Schalter aufweisen, als es Verbrauchergruppen, oder Einzelverbraucher gibt, die mit diesem Schalter zu schalten sind. Im Extremfall soll es möglich sein, durch einen einzigen Schalter mit Hilfe eines Bedienverfahrens sämtliche am Hausstromnetz mittelbar oder unmittelbar angeschlossenen Verbraucher eines Raums, eines Gebäudestockwerks oder eines gesamten Gebäudes zu schalten.

Diese Aufgabe wird mit Hilfe der Merkmale des Verfahrens des Anspruchs 1 gelöst, also mit Hilfe eines erfindungsgemäßes Verfahrens zum Betätigen eines Schalters, der mindestens ein relativ zu einem Grundelement bewegbares Schaltelement und/oder mindestens ein zu einem Grundelement stationäres Schaltelement, welches ein Bedienelement, mancherorts auch Betätigungselement genannt, das wiederum eine Betätigungsfläche zum Bedienen durch den Bediener, umfasst, wobei das Schaltelement geeignet ist, mindestens ein Dauerschaltsignal abzugeben, und wobei die Eigenschaften sowie die Wirkungen dieses mindestens einen Dauerschaltsignals durch den Bediener des Schalters in einem ersten Verfahrensschritt frei definierbar sind. In jedem Fall korrespondieren damit das erzeugte Dauerschaltsignal erfindungsgemäß über diese erfindungsgemäße Programmierbarkeit mit den Eingaben des Bedieners.

Dieses Verfahren kann nicht nur bei Lichtschaltern, sondern insbesondere bei allen Schaltern Verwendung finden, welche z.B. die folgenden Merkmale aufweisen:
- ein Trägerelement, auch oft als Grundelement bezeichnet
- ein einziges zu bedienendes, Betätigungselement/Bedienelement, oft auch aufgrund seiner Funktion als Schaltelement bezeichnet, umfassend eine, oder mehr als eine Betätigungsfläche, welche beweglich auf dem Trägerelement angebracht ist/sind,
   - wobei die Betätigungsfläche relativ zum Trägerelement in mindestens drei Richtungen bewegbar ist, worunter bei einem rechteckigen Schalter beispielsweise als eine Richtung die Schaltrichtung rechts/links, als eine weitere Schaltrichtung die Schaltrichtung oben/unten, als eine noch weitere Schaltrichtung das Drücken in das Zentrum des Schalters und/oder außerdem aber auch beispielsweise das Betätigen der Diagonalen, also der Ecken des Schalters in Frage kommen,
   - jede Betätigung des Betätigungselements/Bedienelements mindestens einen Schaltvorgang für mindestens einen Verbraucher oder mindestens einer Gruppe von Verbrauchern bewirkt, oder die Vorauswahl einer Gruppe von Verbrauchern bewirkt und
   - sämtliche Schaltvorgänge an den mindestens einen Verbraucher oder mindestens eine Gruppe von Verbrauchern durch lokale Betätigung des Betätigungselements/Bedienelements auslösbar ist.

Das erfindungsgemäße Verfahren kann aber auch Verwendung bei Schaltern finden, die lediglich eine einzige Betätigungsrichtung, wie es beispielsweise bei Tippschaltern, auch Taster genannt, oder Drehschaltern der Fall ist, aufweisen, oder auch bei Schaltern, die mindestens eine berührungssensitive Oberfläche, mit oder ohne Vorgabe einer vorgegebenen Betätigungsrichtung aufweisen.
Besonders vorteilhaft sind derartige Schalter, wenn sie außerdem an mindestens einer Stelle in der Lage sind, sequentiell, also zeitlich nacheinander, unterschiedliche Farben darzustellen.

Das erfindungsgemäße Verfahren kommt insbesondere für Stromschalter in Frage, bzw. konkreter für Stromschalter, welche in einem Hausstromnetz die darin befindliche Spannung zu schalten in der Lage sind, bzw, außerdem noch konkreter für Schalter, die als Lichtschalter in einem Hausstromnetz die darin befindliche Spannung zu schalten in der Lage sind, bzw. hierfür verwendbar sind.

Besonders geeignet ist das beanspruchte Verfahren daher für Schalter, welche in normgerechte Unterputzdosen einfügbar sind.

Das erfindungsgemäße Verfahren kommt auch für Hausgeräteschalter in Frage, die geeignet sind, Funktionen an den Hausgeräten zu bewirken, wie z.B. Dimmer.
Das erfindungsgemäße Verfahren ist aber auch auf Schalter anwendbar, welche am zu schaltenden Gerät selbst angebracht sind, die also bisher als klassische Ein- / Ausschalter wirkten, oder auch auf Schalter, welche in Steckerleisten angebracht sind, so lange sie die erfindungsgemäßen Eigenschaften aufweisen. Das Feld der erfindungsgemäßen Anwendungen erstreckt sich grundsätzlich auf jeden Schalter, welcher Strom zu schalten in der Lage ist, insbesondere Schalter zum Schalten von der in einem Hausstromnetz befindlichen Spannung. Natürlich würde der Fachmann das erfindungsgemäße Verfahren auch auf Schalter anwenden, welche eine beliebige Kombination der geschilderten Funktionen aufweisen.

Ein Merkmal dieses erfindungsgemäßen Verfahrens ist, mit Hilfe eines Schalters, mindestens ein Dauerschaltsignal zu erzeugen, dessen Eigenschaften und dessen Wirkung durch den Bediener des Schalters in einem ersten Verfahrensschritt frei definierbar sind.
Schalter, insbesondere Stromschalter, weisen mindestens ein relativ zu einem Grundelement, welches z.B. in einer Wand oder einem Gerät fest installiert sein kann, bewegbares Schaltelement, wie es bei klassischen Schaltern/Tastern der Fall ist, und/oder mindestens ein zu einem Grundelement stationäres Schaltelement, wie z.B. eine berührsensitive Oberfläche (Touch-Screen), auf, wie es bei modernen Schaltern/Tastern oftmals der Fall ist; wodurch diese Schalter die in einem Hausstromnetz befindliche Spannung zu schalten in der Lage sind. Diese Schalter sind erfahrungsgemäß in ihrer Wirkung nicht frei definierbar, da jeder Schalter mit Hilfe einer Drahtleitung mit mindestens einem Verbraucher fest verbunden ist und lediglich die Funktionen bereitstellt, zu welchen er physikalisch ausgelegt ist, und das ist bei Schaltern des Standes der Technik das Schließen eines Stromkreises, wobei Schalter im klassischen Verständnis nach dem Schaltvorgang in der zuletzt eingenommenen Lage verbleiben. Hierin unterscheiden sich Schalter von Tastern, wobei eine Taste oder ein Taster ein, meist mechanisches Bedienungselement ist, das durch Drücken bedient wird und üblicherweise beim Loslassen wieder in den Ausgangszustand zurückspringt.
Der Einfachheit halber werden in dieser Anmeldung unter Schalter, bzw. da in der Alltagssprache statt Schalter auch der Begriff "Lichtschalter" allgemein verwendet wird, darunter auch "Taster" verstanden, um Verwirrung zu vermeiden. Die Erfindung ist daher nicht auf Schaltelemente beschränkt, welche nach Betätigung in der letzten Position verharren, sondern erstreckt sich auch auf Schaltelemente, welche z.B. Licht zu schalten in der Lage sind, aber sich nach Betätigung wieder in die Ursprungsposition zurückkehren und daher bezogen auf ihre technischen Funktion in manchen, insbesondere technischen Kreisen als Taster bezeichnet werden.
Neuartige Schalter können auch eine berührsensitive Oberfläche (Touch-Screen) aufweisen. Derartige Ausgestaltungen benötigen oftmals keine beweglichen Elemente mehr, da die Funktionen der zuvor beweglichen Elemente durch Berührungen der sensitiven Oberfläche ganz oder teilweise ersetzt werden können. Derartige neuartige Schalter weisen daher mindestens ein zu einem Grundelement stationäres Schaltelement auf, wobei das Grundelement üblicherweise in eine Wand oder in ein Gerät einbaubar sind. Damit sind sie, u.a. weil sie als moderne Schalter mit ihrem Grundelement fest eingebaut sind, von anschließbaren, als Schalter wirkenden Computern, Telephonen, PDAs abgegrenzt, weil letztere mindestens nicht fest eingebaut sind.
Umfasst sind hiermit auch Schalter, die sowohl mindestens ein relativ zu einem Grundelement bewegbares Schaltelement, als zusätzlich mindestens ein zu einem Grundelement stationäres Schaltelement aufweisen. Eine Ausgestaltungsform hierfür könnte ein Modell sein, welches eine Tast- oder Wippbewegung in die x bzw. -x Richtung, und/oder in die y bzw. -y Richtung, und/oder in die Richtung der einen bis vier Diagonalen und/oder eine Tastbewegung in das Zentrum des Schalters erlaubt, dessen Oberfläche, also dessen Betätigungsfläche außerdem berührsensitiv ist und hiermit z.B. Streichbewegungen als Informationen zu interpretieren in er Lage ist.
Darüber hinaus grenzen sie sich von neuerdings in Erscheinung tretenden Bedienterminals ab, da die erfindungsgemäßen Schalter in die Wand fest eingebaut sind, durch den Bediener programmierbar sind, in eine Norm-Unterputzdose passen, und weil ihr Überputzelement das die von Schaltern gewohnten Maße besitzt, insbesondere in etwa die bei konventionellen quadratischen Schaltern über Putz üblichen Maße von 80*80mm.
Bei diesen Schaltern findet die Funktion Stromkreise durchzuschalten, im Schalter selbst statt. Außerdem schalten diese Schalter mit Hilfe einer Schaltfunktion nur eine einzige angeschlossene Leitung bzw. Stromkreis, wodurch zwangsläufig alle daran angeschlossenen Verbraucher zeitgleich mit dem durch den Schalter geschlossenen Stromkreis mit Strom versorgt werden.

Erfindungsgemäß wird ein Schalter so weitergebildet, daß er nicht schaltertypisch einen Stromkreis schließt und geschlossen hält, bis er erneut betätigt wird, um den geschlossenen Stromkreis wieder zu öffnen, sondern daß er einen Impuls oder ein Dauersignal bereitstellt, der/das wiederum durch den Bediener des Schalters frei definierbar ist, bzw. konkreter, dessen Dauer bzw. dessen Gestalt durch den Bediener des Schalters frei definierbar ist. Diese werden dann in einem Telegramm zusammengefasst und insbesondere durch RS 485; Ethernet; Digitalstrom weitergeleitet. So kann werkseitig oder durch einen Programmiervorgang durch den Bediener vor Ort vorgegeben werden, daß eine charakteristische, also eine zuvor definierte, Schalterbetätigung einer korrespondierenden eigentümlichen Reaktion zugeordnet ist.
So kann auch bei der Erfindung werkseitig vorgegeben werden, dass eine Schalterbetätigung ein definiertes Ende und einen definierten Anfang haben muss, um als Impuls erkannt zu werden; ob ein solcher Impuls aber nun eine Dauer von kleiner gleich einer Sekunde andauert, wie weiter unten definiert, oder ob ein solcher Impuls auch länger, wie beispielsweise 1,4 Sekunden andauert, kann erfindungsgemäß durch den Bedienter des Schalters definiert werden, um so diese Schalter an die physischen Möglichkeiten des Berliners (z.B. einer älteren Person) anzupassen.
Weiterhin ist durch den Bedienter des Schalters definierbar, welche durch den Bedienter des Schalters eingegebene Impulsfolge welchem Befehl und damit welcher Funktion des Verbrauchers zugeordnet werden soll. So kann zwar standardmäßig ab Werk für eine Impulsfolge (kurz-lang), wie weiter unten erklärt, der Zutritt in den Programmierermodus eröffnet und wieder beendet werden, wenn jedoch der Bedienter des Schalters es bevorzugt, eine komplexere Signalfolge mit dieser Wirkung zu verknüpfen, so kann er dies dank der erfindungsgemäßen freien Definierbarkeit des Schaltimpulses ebenfalls tun. Diese Funktion ist insbesondere dann wichtig, wenn beispielsweise Dritte (z.B. Kinder) die Möglichkeit entdeckt haben, das Verhalten und die Allokation der Verbraucher in einer Verbrauchergruppe ihren eigenen Wünschen anzupassen, was sie gegebenenfalls nicht sollten. Durch die erfindungsgemäße Änderbarkeit der Eigenschaft der Impulsfolge kann dies verhindert werden.

Darüber hinaus können die mit einem Impuls bewirkten Wirkungen durch den Bedienter des Schalters geändert werden, indem der Bedienter definiert, welche Verbraucher im einzelnen zu einer der Verbrauchergruppen hinzugenommen werden können und wie sich jeder dieser Verbraucher innerhalb einer Verbrauchergruppe bei Eingang eines Befehls beim Verbraucher zu verhalten hat. Der große Vorteil dieser Definierbarkeit der Gestalt und Wirkung des Schaltimpulses ist, dass die Definition des Verhaltens eines jeden Verbrauchers in einer Gebäudeeinheit an einem Schalter vor Ort in genau dieser betreffenden Gebäudeeinheit, also dezentral erfolgen kann. Auf diesem Wege sind besonders präzise Anpassungen an die jeweiligen örtlichen Gegebenheiten möglich,

Eine Wirkung dieses erfindungsgemäßen Verfahrens ist, daß mit dessen Hilfe die Begrenzung überwunden wird, daß mit Hilfe einer Schaltfunktion nur eine einzige angeschlossene Leitung bzw. Stromkreis geschalten werden kann, wodurch zwangsläufig alle daran angeschlossenen Verbraucher zeitgleich mit dem durch den Schalter geschlossenen Stromkreis mit Strom versorgt werden.

Um diese Begrenzung zu überwinden, kann ein beliebiger Schalter erfindungsgemäß Zugriff auf eine Datenbank nehmen, in welcher Codes hinterlegt sind, mit deren Hilfe jeder Verbraucher einzeln ansprechbar ist. Sowohl die Datenbank, als auch die Umsetzung des Bedienerverhaltens in Schaltimpulse und/oder Dauerschaltsignale findet im Schalter, also innerhalb einer Norm-Unterputz-Dose statt.
So greift der Bediener des Lichtschalters durch sein Eingabeverhalten bzw. konkreter durch sein Eingabeverfahren indem er einen Schaltimpuls oder ein Dauersignal bewirkt, auf diese Datenbank zu, aktiviert in dieser Datenbank einen zu diesem Schaltimpuls oder Dauersignal korrespondierenden codierten Befehl, der dann zum Verbraucher übermittelt wird und der betreffende Verbraucher erkennt durch eine eingebaute Analysebaugruppe, ob er angesprochen wurde, und wenn er angesprochen wurde, welches Verhalten er durchzuführen hat.
Hierbei ist es unerheblich, wo diese Datenbank angeordnet ist, besonders gute Ergebnisse wurden durch Datenbanken erzielt, welche in den Schalter direkt eingebaut sind. Die Übermittlung der Befehle kann dann über das Stromnetz an alle Verbraucher weitergeleitet werden, oder auch alternativ auf anderen Wegen, wie beispielsweise durch Funk oder über Bussysteme. Die Interpretation eines jeden an alle Verbraucher übermittelten Befehls kann vorzugsweise in der geschilderten Analysebaugruppe im Verbraucher selbst erfolgen. Hierbei kann der Verbraucher ermitteln, ob er angesprochen wurde.
Die Korrespondenz zwischen dem Bedienverhalten des Eingebenden und dem zu diesem Bedienverhalten zuzuordnenden Befehlen bzw. Codes kann mit Hilfe einer externen Steuerungssoftware unterstützt werden.
So kann ergänzend so erfindungsgemäßen Definition durch den Bedienter selbst unterstützend mit Hilfe einer solchen Software eingestellt werden, dass ein Schalter nur die sich im Raum des Schalters befindlichen Verbraucher schaltet und welche weitere Betätigung des Bedieners notwendig ist, um unter genau in diesen Verbrauchern nur eine definierte Gruppe zu adressieren, wie beispielsweise Beleuchtungsmittel, und welche noch weitere Betätigung des Bedieners notwendig ist, um innerhalb dieser Gruppe von beispielsweise Beleuchtungsmitteln die Leselampe zu selektieren und welche außerdem noch weitere Betätigung des Bedieners notwendig ist, um bei dieser z.B. Leselampe deren Verhalten, wie zum Beispiel deren Leuchtintensität einzustellen.

Durch derart aufgebaute Schalter ist es möglich mit Hilfe einer einzigen Betätigungsfläche sämtliche Verbraucher eines Raums, eines Stockwerks, oder eines Gebäudes zu schalten. Hierfür ist es notwendig, daß die Zuordnung vom Schalter zum zugeordneten Verbraucher nicht mehr über die physische Verbindung der Stromleitung definiert wird, sondern durch das Bedienverfahren dieses Schalters, wobei das Schaltelement geeignet ist, mindestens einen Schaltimpuls und/oder mindestens ein Dauerschaltsignal abzugeben, und wobei die Eigenschaften sowie die Wirkungen dieses mindestens einen Schaltimpulses und/oder mindestens einen Dauerschaltsignals durch den Bediener des Schalters in einem ersten Verfahrensschritt frei definierbar sind.

Dieser erste Bedienschritt ist bei Standardschaltern aus dem Stand der Technik gar nicht möglich, da diese durch ihren Aufbau den Bediener dazu zwingen nur eine Betätigung an einer Betätigungselement/Bedienelement durchzuführen, wobei dessen Betätigungsfläche dasjenige Teil des Schaltelements bzw. Betätigungselement/Bedienelement ist, welches dem Bediener durch die zugewandt ist, und dadurch das Berühren, Umlegen, Niederpressen oder Drehen erlaubt. Dieser Betätigung ist bei herkömmlichen Lichtschaltern zwangsweise der Funktion des Schließen bzw. Öffnen des betreffenden Stromkreises zugeordnet, einerlei ob sie danach in ihre Ursprungsposition zurückkehren oder nicht. Durch die Auflösung dieser zwangsläufigen Koppelung durch die geschilderte Zuordnung von Gruppen von Verbrauchern an geeignete Schaltelemente wird das Feld für das erfindungsgemäße Bedienverfahren erst eröffnet und bei diesem erfindungsgemäßen Bedienverfahren muß daher in einem ersten Verfahrensschritt definiert werden, welches Bedienverhalten des Bedieners überhaupt durch den Schalter als Schaltfunktion identifiziert wird und wenn eine Schaltfunktion identifiziert wurde, welchen Charakter diese Schaltfunktion zugewiesen bekommt.
Die in diesem ersten Verfahrensschritt gegebene freie Definierbarkeit des Schaltimpulses oder Dauersignals, den/das der Bediener einzugeben in der Lage ist, bewirkt, daß jedem charakteristischen Bedientypus des Bedieners des Schalters letztendlich ein eigenes Reaktionsmuster von einem Verbraucher oder einer Gruppe von Verbrauchern zuordenbar ist. Diese Hinterlegung kann als Programmierung werksseitig z.B. in einem EPROM geschehen, oder nachträglich z.B. mit Hilfe von Software, ggf. auch vor Ort des eingebauten Schalters selbst. In beiden Fällen kann dieser Speicher im Schalter selbst abgebracht werden, was zum Vorteil hat, daß er durch externe Einflüsse schwer störbar ist.
Hierbei kann alternativ oder zusätzlich zu dem Schaltimpuls auch ein Dauersignal eingegeben werden. Dauersignale können z.B. durch ein Gedrückthalten des Schalters bewirkt werden, oder aber auch wenn der Schalter einen sensitive Oberfläche hat, auch durch eine länger andauernde Berührung. Die als Dauersignal zu wertende Berührdauer kann hierbei z.B. am Schalter selbst oder durch ein anschließbares Programmierterminal eingestellt werden. So kann beispielsweise festgelegt werden, daß eine Berührung, welche länger als z.B. eine Sekunde andauert als Dauersignal gewertet wird. Diese Berührung kann auch in bewegter Form, z.B. durch Überstreichen dieser Oberfläche erfolgen, wobei ein entsprechender oberflächensensitiver Schalter zusätzlich auch noch die jeweiligen Richtungsinformationen identifizieren kann. So kann beispielsweise ein (Entlang-)Streichen von z.B. länger als einer Sekunde von unten nach oben nicht nur als Dauersignal gewertet werden, sondern zusätzlich auch als Richtungsinformation, im vorliegenden Beispiel z.B. als "nach oben"-Fortbewegungsbefehl. Analog können auch die Richtungen auf die Seiten und in die Diagonalen oder nach unten belegt werden. Darüber hinaus können auf analoge Weise auch beliebig gestaltbare Sonderzeichen bzw. Symbole hinterlegt werden. Ein Tippen in das Zentrum kann z.B. als An-Aus-Befehl verstanden werden.

Es hat sich als vorteilhaft erwiesen, wenn in diesem ersten Bedienverfahrensschritt der Bediener bei diesem ersten Verfahrensschritt zuerst in den Programmiermodus eintritt und in diesem Programmiermodus zuerst mindestens einen derartigen Impuls und/oder einen derartiges Dauerschaltsignal definiert und hierbei die folgenden Grundeinstellungen des Schalters definiert werden, die jeweils auf festlegbare ZeitintervallZeitintervallen bezogen sind, wobei:
der Schaltimpuls durch eine frei definierbare Länge eines ersten Zeitintervalls festgelegt wird, und wobei das Dauerschaltsignal durch eine frei definierbare Länge eines zweiten Zeitintervalls festgelegt wird und wobei die maximale Länge der Pause zwischen diesen festgelegt wird und wobei nach dieser Definition in einem weiteren Schritt diese definierten Impulse und/oder Signale mindestens einem einzigen Verbraucher und/oder mindestens einer Gruppe von Verbrauchern zuordnet werden.
Wenn ein Signal von kleiner gleich einem ersten Zeitintervall Kontinuität als Standardimpuls definierbar ist, so kann hierdurch ein Standardmaß für einen einzigen Schaltimpuls definiert werden, was bewirkt, daß wenn der Bediener beispielsweise kürzer als diese Dauer die Betätigungsfläche betätigt, dies vom Schalter immer so interpretiert würde, als daß ein einziger Standardimpuls eingegeben wurde, also so als ob der Schalter einmal betätigt wurde. Durch diese vorteilhafte Normierung eines Standardimpulses kann ein anderes Eingabeverhalten als weitere Bedienerinformation gewertet werden, so daß der eine Schalter hierdurch schon zwei unterschiedliche Impulse abzugeben in der Lage ist, wodurch seine Einsatzbreite im Vergleich zum Stand der Technik schon mindestens verdoppelt wurde.

Wenn ein Signal von einer längeren Kontinuität als der ersten Zeitintervall als Dauerschaltsignal definierbar ist, so kann hierdurch eine minimale Dauer eines weiteren Schaltimpulses definiert werden, was bewirkt, daß wenn der Bediener beispielsweise länger als diese Dauer des ersten Zeitintervalls die Betätigungsfläche betätigt, dies vom Schalter immer so interpretiert würde, als daß ein Dauersignal eingegeben wurde, also so als ob der Schalter nicht ein einziges mal betätigt wurde, wodurch ein einziger Impuls freigesetzt würde, der ein definiertes zeitliches Ende aufweisen würde, sondern er wird so interpretiert, als ob der Schalter für eine Zeitdauer niedergedrückt würde, der Bediener also seinem Wunsch nach einer kontinuierlichen Bewegung eines Verbrauchers Ausdruck verleiht. Dies ist zum Beispiel der Fall, wenn der Bediener eine Dimmfunktion eines Beleuchtungsmittels, oder das Öffnen eines Rollladens bewirken möchte und dabei selbst die Kontrolle behalten möchte, wie weit diese betätigten Elemente in ihrer Zustandsänderung voranschreiten oder abnehmen sollen. In beiden Fällen muß das Signal als Dauersignal erst erkannt werden, wobei dessen Signalende willkürlich durch den Bediener setzbar ist.

Wenn eine Zeitintervall eine Sekunde beträgt, bzw. noch vorteilhafter, bis 800 Millisekunden beträgt, ist eine Eingabe besonders einfach umsetzbar, wobei der Fachmann den Bereich um diese Werte auch noch als umsetzbar im Betracht ziehen würde, wenn es darum geht, die Zeitintervalle an bestimmte Personengruppen und deren Fähigkeiten anzupassen. Beispielhaft seien hier die schon erwähnten älteren Personen erwähnt, bei welchen sich Werte von bis zu ca. 1,4 Sekunden bewährt haben. Dauern darüber werden als Dauersignal gewertet.

Durch die hierdurch ebenfalls durch diese freie Definition bewirkte Normierung, ab wann eine Eingabe als Dauerschaltsignals zu weiten ist, kann neben dem schon definierten Impuls eine zweite Grundgröße definiert werden, die beim Betätigen eines Schalters und beim Bedienen und Programmieren von Verbrauchern von Hilfe ist.

Weiterhin kann durch den Bediener erfindungsgemäß auch die maximale Länge der Pause zwischen diesen festgelegt werden. Durch diese Anpassbarkeit der Pausendauer zwischen zwei Impulsen/Signalen kann ein erfindungsgemäßer Schalter vorteilhaft noch präziser auf die Fähigkeiten des Bedieners angepasst werden.

Nach diesen Definitionen können in einem weiteren Schritt diese definierten Impulse und/oder Signale durch den Bediener mindestens einem einzigen Verbraucher und/oder mindestens einer Gruppe von Verbrauchern zuordnet werden.

Besonders vorteilhafte Erfahrungen wurden bisher mit Dauern bis um die 800 Millisekunden gemacht, die als erstes Zeitintervall interpretiert werden, wobei die Dauern darüber als Dauersignal interpretiert werden. Eine weitere vorteilhafte Ausgestaltungsform sieht vor, dass zusätzlich als zeitliche Untergrenze durch den Bediener außerdem auch noch ein Schwellwert definierbar ist, von der ab eine Zeitdauer bis um diese 800 Millisekunden als erstes Zeitintervall interpretiert wird und wobei die Zeiten darüber als Dauersignal interpretiert werden. Diese Dauern unterhalb dieses Schwellwerts können dann als drittes Zeitintervall interpretiert werden. Dieser Schwellwert kann vorteilhafterweise gezielt unergonomisch gesetzt werden, wofür sich Dauern von bis zu um die 100 Millisekunden als geeignet erweisen haben und markiert damit beispielsweise eine Zutrittshürde in einen Expertenmodus o.ä. die normalen Bedienern verschlossen bleibt, da sie außerhalb eines normalen Bedienverhaltens liegen. Natürlich kann auch dieser Wert erfindungsgemäß an das Bedienverhalten der angezielten Nutzergruppe angepasst werden und wird bei älteren Personen anders gesetzt werden, als bei sehr jungen Personen.

Ebenso kann vorteilhafterweise durch den Bediener die Pausenlänge zwischen zwei Signalen definiert werden, um die jeweiligen Eingaben als voneiander getrennt wahrzunehmen. Als besonders geeignete Werte haben sich hierbei Dauern von bis zu um die eine Sekunde herausbebildet, was bedeutet, dass bis zu etwa eine Sekunde Zeitdifferenz zwischen zwei Eingaben beide Eingaben als zu einer Eingabenfolge zueinandergehörig interpretiert werden. Dauern oberhalb der definierten Pausendauern werden dann als Befehl interpretiert, dass die Eingabe abgeschlossen ist. Als besonders bewährte Werte, die zuvor beschriebenen, ersten und dritten, also die kurzen Zeitdauern voneinander zu trennen, haben sich Pausendauern von 80-150 Millisekunden als besonders ergonomisch bewährt. Auch hier gilt aber, dass diese wie alle anderen Dauern an die jeweiligen Fähigkeiten der jeweiligen Personengruppen erfindungsgemäß anpassbar sind, auch wenn diese Dauern jenseits der für Bediener mit durchschnittlichen Fähigkeiten beschriebenen Werte liegen.

Natürlich sind in diesem Verfahrensschritt auch Kombinationssignale, wie beispielsweise ein Doppelklicken, oder weitere Grundsignale von unterschiedlicher abgeschlossener Zeitdauer definierbar (beispielsweise Signale mit Morsecharacter). So wurden für einen Doppelklick bisher gute Erfahrungen mit Zeitdauern von 10 Millisekunden, bis 400 Millisekunden gesammelt, die von einer Pause zwischen 10 Millisekunden und 300 Millisekunden unterbrochen wurden. Auch diese Dauer kann an die beispielsweise altersbedingte Reaktionsfähigkeit des Bedieners angepaßt werden und ist somit besonders bedienerfreundlich. Als besonders herausragende Werte haben sich bei einem Doppelklick Zeiten von um die 200 Millisekunden für den ersten Klick und um die 250 Millisekunden für den zweiten Klick herausgestellt, die von einer Pause von um die 160 Millisekunden unterbrochen wurden. Auch sind auf diese Weise Kombinationscodes von mindestens einem Impuls mit mindestens einem Dauersignal beliebig gestaltbar.

Wenn eine Pause zwischen zwei Impulsen, eine definierte Zeitdauer von beispielsweise minimal 160 Millisekunden aufweist, kann dies als Standardpause definiert werden. Die Definition einer solchen Standardpause bewirkt, daß nicht jede leichte Schwankung im Betätigungsverhalten als anderes Eingabesignal bzw. als durch den Bediener eingegebener Code interpretiert würde. Insbesondere wird hierdurch vermieden, daß schlecht entprellte Schalter Fehlsignale liefern. Das gleiche gilt im Grundsatz auch für die Dauersignale.

Auf diese Weise können auch Standardbefehle frei definiert werden, die in der Grundeinstellung hinterlegbaren Reaktionen bewirken. Hierdurch wird bewirkt, daß der Bediener mit Hilfe der Definition eigener Standardbefehle einen direkten Zugriff auf die durch ihn persönlich zusammengestellten Verhaltensmuster der Verbraucher erhält. Er ist hierdurch in der Lage das Verhalten aller Verbraucher selbst zu definieren, über den Schalter zu programmieren und über den Schalter zu steuern und ihr Verhalten abzurufen.

Ein solcher erster wichtiger Standardbefehl kann beispielsweise bewirken, daß der Bediener überhaupt in einen Bedienerprograznmiermodus Zutritt erhält. In diesem Bedienerprogrammiermodus hat der Bediener dann die Möglichkeit, sich die in Folge beschriebenen Verbrauchergruppen nach seinen Bedürfnissen selbst zusammenzustellen. So kann er alle Lampen eines Raumes zu einer Verbrauchergruppe zusammenstellen und/oder er kann sich ein eigenes Szenario, wie beispielsweise ein "Essszenario" definieren, in welchem der Fernseher, das Radio und das Telephon ausgeschalten werden und die Beleuchtung über dem Esstisch angeschalten, sowie beispielsweise eine in eine Steckdose am Esstisch eingesteckte Warmhalteplatte eingeschalten werden, wobei zusätzlich zugleich die Beleuchtung in der Küche ausgeschalten wird.
Derartige und weitere beliebig definierbare lebensnahe Szenarien können dann auf gleichberechtigte Weise wie in Folge für die ebenfalls frei definierbaren Verbrauchergruppen beschrieben, hinter dem Schalter hinterlegt werden und entweder auf gleichberechtigte Wiese, wie die Verbrauchergruppen am Schalter abrufbar sein, oder mit Hilfe eines Standardbefehls, der durch den Bediener mit einem durch ihn zusammengestellten Szenario gekoppelt wurde, unmittelbar aufrufbar sein.
Als Standardbefehl zum Eintritt in den Programmiermodus hat sich ein, aus einem Kurzsignal und einem Langsignal kombinierter Befehl bewährt.

In diesem ersten Verfahrensschritt können nicht nur die einzelnen Signalcharakteristika definiert werden, um eine eindeutige Schnittstelle zwischen Bedienerverhalten und Schalterreaktion zu definieren, es können außerdem auch Gruppen von Verbrauchern definiert werden, denen dann Schaltsignale, bestehend aus mindestens einem Schaltimpuls und/oder mindestens einem Dauersignal, zugeordnet werden können.
Wenn jedem Schaltsignal des Schalters, insbesondere Lichtschalters mindestens eine frei definierbare Gruppe von Verbrauchern zuordenbar ist, so wird hierdurch im ersten Verfahrensschritt bewirkt, daß Verbraucher die eine gewisse Gleichartigkeit besitzen, das selbe Reaktionsverhalten aufweisen, wenn genau diese Verbraucher einen Aktivierungsbefehl empfangen. Hierdurch ist beispielsweise durch einen einzigen Aktivierungsbefehl, ausgehend von einem einzigen Schalter erreichbar, daß alle Fensterläden geöffnet werden.
Wenn diesem einen Lichtschalter eine weitere Gruppe zugeordnet wurde, so kann mit der selben Schalterbetätigung mit der zuvor die Fensterläden geöffnet wurden, beispielsweise das Licht betätigt werden.
Voraussetzung hierfür ist, daß diesem Schaltsignal einmal die eine und ein anderes mal die andere Verbrauchergruppe zugeordnet wurde und Voraussetzung ist weiterhin, daß z.B. der Schalter in der Lage ist, anzuzeigen welche der definierten Gruppen gerade aktiviert ist, um als nächstes geschalten zu werden.

Beispielhaft kann eine solche Zuordnung in folgende Gruppen erfolgen, wobei einer Gruppe von Verbrauchern im wesentlichen Beleuchtungsmittel zugeordnet sind; einer anderen Gruppe von Verbrauchern im wesentlichen Unterhaltungsmedien zugeordnet sind; einer noch anderen Gruppe von Verbrauchern im wesentlichen Vorrichtungen zugeordnet sind, welche Einfluß auf die Raumtemperatur haben; einer außerdem noch anderen Gruppe von Verbrauchern im wesentlichen sicherheitsrelevante Vorrichtungen zugeordnet sind, und einer außerdem auch noch anderen Gruppe von Verbrauchern im wesentlichen Hausgeräte zugeordnet sind.

Noch weiter ausdifferenziert kann eine solche Zuordnung nicht nur in folgende Gruppen erfolgen, sondern es können diesen Gruppen auch unterschiedliche Farben zugeordnet werden, die dann auf dem Schalter erscheinen, um anzuzeigen, welche dieser Gruppe gerade auf genau diesem Schalter aktiviert ist, wobei einer Gruppe von Verbrauchern die im wesentlichen Beleuchtungsmittel umfasst, die gelbe Farbe zugeordnet ist; einer anderen Gruppe von Verbrauchern, die im wesentlichen Audiounterhaltungsmedien umfasst, die türkise Farbe zugeordnet ist; einer noch weiteren Gruppe von Verbrauchern, die im wesentlichen Videounterhaltungsmedien umfasst, die violette Farbe zugeordnet ist; einer noch anderen Gruppe von Verbrauchern, die im wesentlichen Beschattungsvorrichtungen umfasst, die graue Farbe zugeordnet ist; einer außerdem noch anderen Gruppe von Verbrauchern, die im wesentlichen Sicherheitsrelevante Vorrichtungen umfasst, die rote Farbe zugeordnet ist; einer darüber hinaus außerdem noch anderen Gruppe von Verbrauchern, die im wesentlichen Zugangsvorrichtungen umfasst, die grüne Farbe zugeordnet ist; und einer darüber hinaus außerdem auch noch anderen Gruppe von Verbrauchern, die im wesentlichen temperaturbeeinflussende Vorrichtungen umfasst, die blaue Farbe zugeordnet ist.
Hierdurch wird bewirkt, daß jede dieser Gruppen einem einzigen Schalter auch dann zugeordnet werden kann, wenn dieser Schalter weniger Schaltfunktionen bereitstellt, als es Gruppen von Verbrauchern gibt. So kann beispielsweise die selbe Eingabe des Bedieners wenn die Lichtgruppe z.B. mit Hilfe ihres gelben Farbsymbols auf dem Schalter angezeigt wird, einmal die Lichtgruppe schalten und wenn die Videogruppe mit Hilfe ihrer violetten Farbsymbols auf dem Schalter angezeigt wird, die Videoanlage schalten.

Die Ausdifferenzierung kann außerdem in diesem ersten Verfahrensschritt aus mit Hilfe räumlicher Kriterien erfolgen. So kann jede der Gruppen räumliche Gegebenheiten, wie Gebäude, Stockwerke, Räume zu unterscheiden in der Lage sein, indem räumliche Parameter bei der Definition von Gruppen einfließen. Im allgemeinen ist eine maximale räumliche Größe erreichbar, die das gesamte Hausstromnetzwerk zwischen Stromzähler und Verbraucher umfaßt.

Durch die Definition dieser Grundparameter ist der erste Verfahrensschritt abgeschlossen und der Lichtschalter als multifunktionaler Auswahl- und Bedienschalter selbst dann verwendbar, wenn er mehr Verbraucher(gruppen) schalten soll, als er selbst physische Schaltzustände besitzt. Durch dieses Verfahren können daher Lichtschalter bedient werden, die weniger Zuleitungen zum Schalter aufweisen, als Verbrauchergruppen die mit diesem Schalter zu schalten sind. Im Extremfall ist es sogar möglich, mit einem einzigen Schalter mit Hilfe dieses Bedienverfahrens sämtliche Verbraucher eines Raums, eines Gebäudestockwerks oder eines gesamten Gebäudes zu schalten.

Weitere Ausgestaltungsformen der Erfindung werden in den Unteransprüchen beschrieben.

Die Erfindung ist ebenso für Schalter, die mindestens eine berührungssensitive Oberfläche umfassen, wobei diese berührungssensitive Oberfläche im Schalter eine An-Aus-Schaltwirkung und/oder eine Dauersignalwirkung bereitzustellen in der Lage ist geeignet, wie für die Schalter, welche lediglich Impulse bereitstellen. Einziger Unterschied ist, dass bei diesen Schaltern durch den Bediener noch mehr Informationen eingegeben werden können, als bei Schaltern, welche Impulse abgeben, da bei Schaltern mit berührungssensitiven Oberflächen auch Richtungen einer Streichbewegung als Information gewertet werden können, eigene Symbole definiert werden können und auch die Berührdauer als Information gewertet werden kann.

So ist das erfindungsgemäße Verfahren zum Betätigen eines Schalters, wobei der Schalter durch eine Berührung der Schalteroberfläche mit Antippcharakter die An-Aus-Schaltwirkung und/oder durch eine Berührung der Schalteroberfläche mit Streichcharakter eine Dauersignalwirkung bereitzustellen in der Lage ist, dem Bediener besonders eingängig und geht ihm besonders effizient von der Hand, um beispielsweise mit Hilfe einer kurzen Tippberührung auf einer solchen berührungssensitiven Oberfläche die technische Funktion des An-Ausschaltens zu bewirken, bzw. um mit Hilfe einer Berührung mit Streichcharakter die technische Funktion des Dauersignals zu bewirken, oder um mit einer derartigen Berührung eine sonstige technische Funktion zu bewirken, wie beispielsweise eine Gruppenauswahl, eine Geräteauswahl, eine Funktionsauswahl etc.

Es ist darüber hinaus vorteilhaft, wenn das erfindungsgemäße Verfahren zum Betätigen eines Schalters in der Lage ist, jeder dieser Antippdauern und/oder Antippfolgen die Schaltung eines anderen Verbrauchers und/oder Gruppe von Verbrauchern zuzuordnen, wobei der Schalter bei der Berührung der Schalteroberfläche mit Antippcharakter unterschiedliche Antippdauern und/oder Antippfolgen zu identifizieren und in der Lage ist. Hierdurch wird die Wirkung bereitgestellt, dass durch das erfindungsgemäße Verfahren, mit Hilfe individueller Antippdauern und/oder Antippfolgen eine nun ebenso große Anzahl an technischen Folgen hinterlegt werden kann, wie Antippdauern und/oder Antippfolgen hinterlegt wurden, da auf diesem Wege einem einzigen Schalter eine beliebige Zahl an Eingabemustern hinterlegt werden können, die grundsätzlich ins Unendliche gesteigert werden kann.

So ist außerdem eine Weiterbildung des erfindungsgemäßen Verfahrens zum Betätigen eines Schalters besonders vorteilhaft, wobei der Schalter bei der Berührung der Schalteroberfläche mit Streichcharakter unterschiedliche Streichrichtungen und/oder Streichsymbole zu identifizieren und in der Lage ist und jeder dieser Streichrichtungen und/oder Symbole die Auswahl einer Gruppe von Verbrauchern und/oder innerhalb einer solchen Gruppe einer Untergruppe, bzw. eines einzelnen Verbrauchers und/oder bei einem einzelnen Verbraucher dessen Funktionen und/oder bei einer dieser Funktionen eines Verbrauchers die mit Hilfe der menschlichen Sinne vernehmbare Intensität der Wirkung dieses Verbrauchers in der Lage ist zuzuordnen.
So kann mit Hilfe des erfindungsgemäßen Verfahrens nur durch Tippen und Überstreichen der Oberfläche eines Schalters ein gesamtes hinterlegtes Menü durchwandert werden, indem beispielsweise durch Streichen nach rechts die Menüpunkte durchwandert werden, durch Tippen ein mit Hilfe der Durchwanderung ermittelter interessierender Menüpunkt herausgepickt/ausgewählt wird und dann durch erneutes Streichen wiederum dessen Untermenüpunkte durchwandert werden kann; wobei auf diese Weise mit Hilfe von Durchwandern durch Streichen und Auswählen/Herauspicken durch Tippen nicht nur ein jedes Einzelgerät (z.B. in Untermenüs befindlich) aus beliebig definierbaren Gruppen (z.B. in Stammmenüs auswählbar) ist, sondern auch, wenn das zu bedienende einzelne Gerät dies gestattet, innerhalb dieses Geräts die einzelnen Gerätefunktionen durchwandert und ausgewählt/herausgepickt und dann manipuliert werden können. Natürlich stehen hierbei bei diesem Durchwandern alle Richtungen offen, so kann durch eine zuvor vorgenommene Zuordnung nach rechts vorwärts und nach links rückwärts bedeuten, nach oben kann Anschwellen/Hinzugeben und nach unten ein Verringern/Absenken, beispielsweise einer Jalousie oder der Lautstärke eines HiFi-Geräts, bedeuten.

Durch das erfindungsgemäße Verfahren zum Betätigen eines Schalters, insbesondere Lichtschalters ist in einem weiteren Verfahrensschritt diejenige Gruppe von Verbrauchern auswählbar, die geschalten werden soll, also die der Bediener auszuwählen beabsichtigt. Durch die Eingaben in der Grundeinstellung sind hinter dem (Licht-)Schalter diverse Gruppen von Verbrauchern hinterlegt. Aus diesen hinterlegten Verbrauchergruppen wählt der Bediener des Schalters nun in diesem weiteren Verfahrensschritt die ihn interessierende Gruppe aus. Dies ist bei herkömmlichen (Licht-)Schaltern aus dem Stand der Technik naturgemäß nicht möglich, da bei diesen (Licht-)Schaltern die zugehörigen Verbraucher fest mit Hilfe der Stromleitung mit ihrem eigenen Schalter verbunden sind Eine Variation der Verbraucher ist durch diese Verbraucher-Schalter-Verbindung aus dem Stand der Technik physikalisch unmöglich.
Erfindungsgemäß kann eine solche Variation jedoch geschehen, indem diese Auswahl durch Betätigen eines räumlich definierten Bereichs eines Mehrwegeschalters erfolgt, hinter dem die gewünschte Gruppe von Verbrauchern hinterlegt ist, und/oder durch Eingabe einer vordefinierten Impulsfolge (z.B. in den Tipptaster), der die betreffende Gruppe von Verbrauchern zugeordnet ist,
und/oder durch Eingabe einer Streichbewegung an einer berührungssensitiven Oberfläche des Schalters, der die betreffende Gruppe von Verbrauchern zugeordnet ist, und/oder durch Eingabe eines vordefinierten Symbols, an einer berührungssensitiven Oberfläche des Schalters, dem die betreffende Gruppe von Verbrauchern zugeordnet ist, und/oder durch Auswahl der betreffenden Gruppe von Verbrauchern, aus Vorschlägen, die der Schalter, insbesondere (Licht-)Schalter unterbreitet.
Legt man beispielsweise einen (Licht-)Schalter zugrunde, der aus einem Tipptaster aufgebaut ist, so können hierdurch vorteilhaft eine beliebige Anzahl von derartigen Verbrauchergruppen bei diesem einzigen Tipptaster hinterlegt werden. Der Wechsel zwischen diesen Verbrauchergruppen kann so erfolgen, daß diese durch Eingabe eines definierten Bedienmusters z.B. eines Doppelklick, automatisch eine Verbrauchergruppe nach der anderen z.B. mit Hilfe ihres zugeordneten Farbcodes in dem Tipptaster angezeigt wird, wobei die gerade aktive Farbe der auswählbaren Gruppe für eine definierte Zeitdauer z.B. im Zentrum des Tipptasters erscheint und z.B. durch einen Einfachklick auswählbar ist. Selbstverständlich können auch Schalter mit berührsensitiver Oberfläche in diesem Sinn als Taster verwendet werden.
Alternativ kann man auch einen mehrdimensionalen Wippschalter, der einem Betätigungsprinzip folgt, wie es er beispielsweise im Stand der Technik durch die DE102004035321 vorgestellt wurde heranziehen, wenn er erfindungsgemäß weitergebildet wurde, was bedeutet, wenn er in die Lage versetzt wurde frei programmierbare Schaltimpulse bereitzustellen. Legt man beispielsweise einen solchen Lichtschalter zugrunde, so kann auch hierdurch vorteilhaft eine beliebige Anzahl von derartigen Verbrauchergruppen bei diesem einzigen mehrdimensionalen Wippschalter hinterlegt werden. Der Wechsel zwischen diesen Verbrauchergruppen kann so erfolgen, daß beispielsweise durch eine Betätigung nach rechts/links die einzelnen Gruppen von Verbrauchern eine nach der anderen durchlaufen werden und wenn die jeweilige Verbrauchergruppe ansprechbar ist, dies dem Bediener mit Hilfe des zuvor genannten Farbcodes an mindestens einer Stelle des Schalters vermittelt wird. Alternativ könnte auch jede der Ecken des Schalters eine andere der beispielsweise vier am häufigsten durch diesen Schalter angesprochenen Verbrauchergruppen / Farben darstellen und durch Betätigen derjenigen Ecke, die die gewünschte Verbrauchergruppe repräsentiert, könnte genau diese, den Bediener interessierende Gruppe ausgewählt werden.
Statt wie beschrieben den Impulsen Funktionen zuzuweisen, können alternativ oder zusätzlich auch durch Eingabe einer Streichbewegung an einer berührungssensitiven Oberfläche des Schalters, der die betreffende Gruppe von Verbrauchern zugeordnet ist, und/oder durch Eingabe eines vordefinierten Symbols, an einer berührungssensitiven Oberfläche des Schalters, dem die betreffende Gruppe von Verbrauchern zugeordnet ist, und/oder durch Auswahl der betreffenden Gruppe von Verbrauchern, aus Vorschlägen, die der Schalter, insbesondere Lichtschalter unterbreitet derartige Zuordnungen, wie zuvor für Impulse beschrieben auch für Dauersignale erfolgen. So kann ein Streichen nach rechts den folgenden Auswahlpunkt im gegenwärtigen Menü auswählen, wie z.B. wenn in einer TV-Geräte-Menügruppe diverse TV-Geräte angeboten werden das interessierende TV-Gerät, oder wie z.B. wenn ein interessierendes TV-Gerät ausgewählt wurde, durch eine taktweise Tippberührung in der rechtren bzw. linken Hälfte des Schalters Schritt für Schritt bzw. durch ein Streichen kontinuierlich die einzelnen Sender der Senderauswahl dieses Geräts durchwandern, wenn man im Menü des interessierenden TV-Geräts ist; bzw. in beiden Fällen durch ein Streichen nach links korrespondierend der vorhergehende Punkt aufrufbar ist; bzw. wenn man sich im Menüpunkt Jalousie ein nach oben bzw. unten Streichen ein Hoch- bzw. Runterfahren aller hinterlegten Jalousien, bzw. einer einzigen interessierenden Jalousie, wenn man sich im Menü dieser konkret interessierenden einen Jalousie befindet.
Nach dem Auswählen der gewünschten Verbrauchergruppe, ist der zweite Verfahrensschritt beendet.

Durch das erfindungsgemäße Verfahren zum Betätigen eines Schalters, insbesondere Lichtschalters kann in einem weiteren Verfahrensschritt eine Gruppe von Verbrauchern, geschalten, insbesondere eingeschalten werden.
Im Fall, wenn die gewünschte Verbrauchergruppe schon ausgewählt ist, kann dies unmittelbar geschehen, oder alternativ nach Auswahl der betreffenden Verbrauchergruppe. Das Einschalten kann durch den Bediener erfolgen, indem er den Schalter so betätigt, daß es durch den Schalter als Einschaltbefehl verstanden wird.

Durch das erfindungsgemäße Verfahren zum Betätigen eines Schalters, insbesondere Lichtschalters können in einem weiteren Verfahrensschritt innerhalb der geschaltenen insbesondere eingeschalteten Gruppe von Verbrauchern die dieser Gruppe zugeordneten Verbraucher einzeln auswählbar sein.
Hierdurch wird bewirkt, daß innerhalb der eingeschalteten Gruppe von Verbrauchern, (z.B. Licht) Untergruppen oder Einzelgeräte ausgewählt werden können, wobei dies auf analoge Weise geschehen kann, wie zuvor die zutreffende Gruppe von Verbrauchern ausgewählt wurde. "Auswählbar" bedeutet in dieser Anmeldung zugleich auch aktivierbar.

Ist ein Verbraucher oder eine Gruppe von Verbrauchern ausgewählt worden, kann in einem weiteren Verfahrensschritt die durch die menschlichen Sinne wahrnehmbare Intensität des bzw. der Verbraucher geändert werden. Hierdurch wird bewirkt, daß wenn ein Verbraucher ausgewählt wurde oder eine Gruppe von Verbrauchern (z.B. Licht), deren Intensität erhöht oder verringert werden kann (z.B. Lichtintensität), wobei auch dies sowohl durch (Multidimensions-)Schalter als auch durch Tipptaster geschehen kann, wenn sie nur das erfindungsgemäße Merkmal aufweisen, daß ihr Signalimpuls frei programmierbar ist.

Mit Hilfe dieser Verfahrensschritte ist ein Bediener in der Lage mit Hilfe eines einzigen erfindungsgemäßen Schalters, insbesondere Lichtschalters, der auch nur eine einzige Betätigungsfläche umfassen braucht, alle Verbrauchergruppen (also Verbraucher von elektrischem Strom) eines Raums, eines Stockwerks eines Gebäudes, oder einer frei definierbaren räumlichen Umgebung auszuwählen, wobei jede Verbrauchergruppe nach individuellen Kriterien definierbar ist und mit Hilfe ihrer Grundeinstellung hinter dem erfindungsgemäßen Schalters, insbesondere Lichtschalter hinterlegt werden kann. Im Extremfall kann eine solche Verbrauchergruppe auch nur aus einem einzigen Gerät bestehen, wie beispielsweise einer Klimaanlage oder einer Heizung. Besteht diese Gruppe aus mehr als einem Gerät, kann auf die erfindungsgemäße Weise jeder einzelne innerhalb einer selektierten Gruppe angeordnete Verbraucher einzeln selektiert werden und entweder einzeln, oder im Rahmen der gesamten Gruppe individuell angesteuert werden. Das heißt, daß z.B. die Audioanlage sowohl an- und ausgeschaltet werden kann, als auch innerhalb der Audioanlage auf analoge Weise die Audioquelle (Radio, CD, MP3 etc.) gewählt werden kann und daß innerhalb der gewählten Audioquelle (z.B. Radio) auf analoge Weise die interessierende Station ausgewählt werden kann, und daß darüber hinaus auch die Lautstärke der ausgewählten Station, die als eine Eigenart der Audioquelle mit den menschlichen Sinnen wahrnehmbar ist, mit der selben Betätigungsfläche variiert werden kann.

Wird die durch die menschlichen Sinne wahrnehmbare Intensität des bzw. der Verbraucher wie beschrieben geändert, besteht darüber hinaus die weitere Möglichkeit mit Hilfe einer im weiteren Verlauf als "smart dimmen" bezeichneten Funktion während des Anschwellens des Änderungsvorgangs schrittweise mindestens einen weiteren Verbraucher hinzuzunehmen, bzw. während des Abschwellens des Änderungsvorgangs, schrittweise mindestens einen weiteren Verbraucher herauszunehmen, also abzuschalten, wodurch eine weitergehende Dimmfunktion erreicht wird, indem also weitere gleichwirkende Verbraucher für eine weitere Intensitätszunahme hinzugeschalten bzw. für eine weitere Intensitätsabnahme abgeschalten werden.
Dies geschieht in einem weiteren Verfahrensschritt, in welchem die durch die menschlichen Sinne wahrnehmbare Intensität des bzw. der Verbraucher noch weiter geändert werden kann, indem weitere gleichwirkende Verbraucher für eine weitere Intensitätszunahme hinzugeschalten bzw. für eine weitere Intensitätsabnahme abgeschalten werden. Hierdurch wird bewirkt, daß in einem Raum, beim Betätigen dieser zuvor beschriebenen Dimmfunktion durch Überschreiten einer im ersten Verfahrensschritt definierbaren und der Grundfunktion hinterlegbaren Schwelle, ein weiterer gleichwirkender Verbraucher hinzugenommen werden kann. So kann beispielsweise im Fall der Beleuchtung durch das Hochdimmen beispielsweise eines einzigen Beleuchtungsmittels ab dieser besagten Stufe mindestens ein weiteres Beleuchtungsmittel hinzugenommen werden, oder es kann auch die Markise zurückgefahren werden, oder der Fensterladen (weiter) geöffnet werden, da alle diese Mittel prinzipiell die gleiche Wirkung bereitstellen, nämlich eine Zunahme von Licht im betreffenden Raum. Im umgekehrten Fall können diese Mittel beim Herabdimmen so hinzugeschalten bzw. abgeschalten werden, daß sie die Wirkung bereitstellen, die Dunkelheit im Raum zu erhöhen, so kann zwar beispielsweise die Stahlkraft des/der Beleuchtungsmittel reduziert werden, aber es können auch bei Unterschreiten einer vordefinierten Schwelle sukzessive die Beschattungsvorrichtungen hinzugeschalten werden, um eine zusätzliche Verdunklung zu erreichen. Auf analoge Weise kann auch bei der Einstellung der Raumtemperatur verfahren werden. So kann zur Erhöhung der Raumtemperatur durch die zuvor beschriebene Funktion des "Smart Dimmens" ab einer zuvor eingebbaren Schwelle eine zusätzliche Wärmequelle automatisch hinzugeschalten werden (wie beispielsweise ein lokal an einer Steckdose angeschlossener Heizlüfter, der smartdimmfähig ist), bzw. beim Herunterregeln können zusätzliche Wärmequellen automatisch während dieses Dimmvorgangs ebenfalls zunächst heruntergeregelt, und dann zu unterschiedlichen Zeiten abgeschalten werden. Es versteht sich bei dieser Funktion von selbst, daß die hinzugeschalteten Verbraucher nicht schlagartig mit ihrer vollen Leistung einbringen müssen, sondern auf eine im ersten Verfahrensschritt hinterlegbare Weise am Dimmprozess partizipieren.
Der besondere Vorteil dieser Funktion liegt darin, daß hierdurch der Energieverbrauch signifikant reduziert werden kann. Der Grund hierfür ist, daß ein beispielsweise um 90% gedimmtes Beleuchtungsmittel nicht etwa um 90% weniger Energie verbrauchen würde, wie es den visuellen Anschein hat, sondern erheblich mehr. Durch das "Smart Dimmen", also das sukzessive Hinzuschalten, bzw. Herausnehmen von Verbrauchern ab Erreichen einer vordefinierbaren Schwelle kann die gewünschte Wirkung bereitgestellt werden, ohne relativ zum Erfolg einen zu hohen Verbrauch an Energie in Kauf nehmen zu müssen. Auf diese Weise können die Verbraucher auf eine signifikant effizientere Art betätigt werden, als im Stand der Technik, ohne hierbei durch einen Komfortverlust in Kauf nehmen zu müssen. Besonders optimal ist es, wenn neue Verbraucher immer dann zu- bzw. abgeschalten werden, wenn sich der Wirkungsgrad eines Verbrauchers verschlechtert.

Ist ein interessierender Verbraucher oder eine Gruppe von Verbrauchern entsprechend eingestellt worden, können in einem weiteren Verfahrensschritt all diejenigen Verbraucher der Gruppe ausgeschaltet werden, die zu dieser Gruppe von Verbrauchern zuvor lokal hinzugeschalten wurden. Diese im weiteren als "Lokaltasterfunktion" bezeichnete Abschaltfunktion ist durch die Möglichkeit charakterisiert, stufenweise definierte Eigenschaften herunterzuschalten, oder abzuschalten. In dieser ersten Abschaltstufe werden mit Hilfe der selben Betätigungsfläche all diejenigen Verbraucher beispielsweise eines Raums, abgeschalten, die zuvor lokal hinzugeschalten wurden. Wenn beispielsweise eine Person in einem Zimmer sich die Leselampe angeschalten hatte und eine weitere Person nach einiger Zeit den Raum betritt und sich hierbei an einem Schalter das Hauptlicht zusätzlich einschaltet, und dann den Raum wieder verläßt, und das Hauptlicht wieder ausschaltet, so bleibt dennoch die zuvor lokal eingeschaltene Leselampe angeschalten. So hat nun die unter der Leselampe sitzende Person die Möglichkeit, beim Verlassen des Raumes mit Hilfe dieser Funktion der "Lokaltasterfunktion" vom (Licht-)Schalter an der Türe aus die zuvor lokal an der Leselampe eingeschaltene Leselampe auszuschalten. Das hierfür an der Betätigungsfläche einzugebende Signal ist in der Grundeinstellung frei definierbar und kann daher eigentlich eine beliebige Gestalt annehmen. Gute Ergebnisse wurden jedoch erzielt, wenn die Zeitdauer des hierfür notwendigen Dauerschaltsignals mehr als eine Sekunde beträgt und vorzugsweise weniger als zwei Sekunden.

Neben dieser ersten Abschaltstufe der Funktion "Lokaltaster" stellt das Verfahren noch eine weitere, zweite Abschaltstufe zur Verfügung, indem in einem weiteren Verfahrensschritt alle Verbraucher des Raumes in den Standby-Modus geschalten werden. Diese zweite Abschaltstufe der Funktion "Lokaltaster" bewirkt, daß alle angesprochenen Verbraucher des betreffenden Raums in den Standby-Modus versetzt werden. Diese Funktion ist hilfreich, wenn der betreffende Raum beispielsweise kurzzeitig verlassen wird. Auch das für diese zweite Abschaltstufe an der Betätigungsfläche einzugebende Signal ist in der Grundeinstellung frei definierbar und kann daher ebenfalls eine beliebige Gestalt annehmen. Gute Ergebnisse wurden jedoch erzielt, wenn die Zeitdauer des hierfür notwendigen Dauerschaltsignals mehr als zwei Sekunden beträgt und vorzugsweise weniger als drei Sekunden, in jedem Fall aber von der ersten Abschaltstufe unterscheidbar ist, die in der Grundeinstellung für diese zweite Abschaltstufe der Funktion "Lokaltaster" hinterlegbar ist.

Neben dieser ersten und zweiten Abschaltstufe der Funktion "Lokaltaster" stellt das Verfahren noch eine weitere, dritte Abschaltstufe der Funktion zur Verfügung, indem in einem weiteren Verfahrensschritt alle Verbraucher des Raumes bzw. der Verwaltungseinheit ausgeschaltet werden. Diese dritte Abschaltstufe der Funktion "Lokaltaster" bewirkt, daß alle angesprochenen Verbraucher des betreffenden Raums ausgeschaltet werden. Diese Funktion ist hilfreich, wenn der betreffende Raum bzw. Gebäudeteil auf Dauer verlassen wird. Auch das für diese dritte Abschaltstufe an der Betätigungsfläche einzugebende Signal ist in der Grundeinstellung frei definierbar und kann daher ebenfalls eigentlich eine beliebige Gestalt annehmen, die von den anderen Abschaltstufen verschieden sein muß. Gute Ergebnisse wurden jedoch mit einem weiteren, von der zweiten Abschaltstufe verschiedenen Dauerschaltsignal von mehr als drei Sekunden erzielt, die ebenfalls in der Grundeinstellung für diese dritte Abschaltstufe hinterlegbar ist.

So ist außerdem eine Weiterbildung des erfindungsgemäßen Verfahrens zum Betätigen eines Schalters besonders vorteilhaft, wobei der Bediener des Schalters in jedem der durch die Ansprüche 4 bis 14 repräsentierten Verfahrenschritte mit Hilfe einer weiteren Eingabemöglichkeit dieses Schalters zum Verfahrensschritt eines der Ansprüche 6 bis 8 gelangt, was in konkreten Fall die Wirkung des unmittelbare Zurückspringen in das Ausgangsmenü oder alternativ das Zurückspringen in ein Zwischenmenü oder auch alternativ zu dem vorhergehenden Menüpunkt bewirkt.

So ist weiterhin eine Weiterbildung des erfindungsgemäßen Verfahrens zum Betätigen eines Schalters besonders vorteilhaft, wobei bei einem mehreckigen Schalter z.B. eine untere rechte Ecke geeignet ist, in dem weiteren Verfahrensschritt des Anspruchs 1-7 oder des Anspruchs 8 unmittelbar die nächstfolgende Gruppe von Verbrauchern auswählbar zu machen und/oder eine untere linke Ecke geeignet ist, in dem weiteren Verfahrensschritt des Anspruchs 1-7 oder des Anspruchs 8 unmittelbar die vorhergehende Gruppe von Verbrauchern auswählbar zu machen, was in konkreten Fall bewirkt, dass für die Funktion des Zurückspringens in mindestens einen vorhergehenden Menüpunkt ein eigenes örtliches Segment des Tasters reserviert ist, wie die Ecken beispielsweise. Alternativ kann diese Funktion auch durch eine zuvor definierte Tippfolge definiert werden. Hierbei kann mindestens eine solche Ecke so programmiert sein, dass sie sich "merkt", auf welche Menüstufen (also z.B. welche Geräte(gruppen)) auf diesem speziellen Schalter bevorzugt zurückgesprungen wird, was zur Wirkung hat, dass diese Ecke jenes Schalters diese Gruppe bevorzugt anbietet, bzw. sogar dauerhaft anbietet. Um diese durch jenes Eck gerade repräsentierte Geräte(gruppe) nach außen und damit für den Bediener kenntlich zu machen, ist es vorteilhaft, wenn diese ein entsprechendes Piktogramm, oder eine entsprechende zuvor definierte Farbe, oder eine andere Widererkennungsmöglichkeit umfasst, und nach außen ausgegeben wird. Ecken eines erfindungsgemäßen Schalters sind hierfür besonders geeignet, grundsätzlich kann jedoch auch ein jeder andere Ort eines erfindungsgemäßen Schalters hierfür in Frage kommen.

So ist eine Weiterbildung des erfindungsgemäßen Verfahrens zum Betätigen eines Schalters besonders vorteilhaft, wobei die mindestens eine Betätigungsfläche vom Schaltelement trennbar angeordnet ist und in getrenntem Zustand in einem dann weiteren Schritt mit diesem mit Hilfe von Fernkommunikationsmitteln zu kommunizieren in der Lage ist. Durch die erfindungsgemäß vorgenommene Trennung von Schaltelement und Betätigungsfläche, wobei als die Betätigungsfläche derjenige Teil des Schaltelements bezeichnet wurde, der dem Bediener zugewandt ist, also der unmittelbaren Bedienung dient, ist es möglich den erfindungsgemäßen Schalter und damit das Verfahren, diesen zu bedienen noch weiter voneinander auszudifferernzieren, so dass das Betätigungsfläche vom Schaltelement auch physisch trennbar ausgestaltbar ist. Hieraus ergibt sich der Vorteil, dass der Bediener diese Betätigungsfläche in (ab)getrenntem Zustand nun mit sich führen kann, während das Schaltelement vor Ort fixiert verbleibt. Als Fernkommunikationsmittel zwischen beiden kommen alle dem Fachmann bekannten Fernkommunikationsmittel, wie z.B. Funk, Infrarot, Kabel etc. in Frage.
Hierbei ist es auch unerheblich, welche Gestalt das vom Schaltelement abtrennbare Betätigungsfläche hat. Es kann sich um ein Element eines Wipp-Schalters, beispielsweise um einen vieldimensionalen Wippschalter (der z.B. ein Wippen in Richtung bis zu allen, also z.B. der einen bis vier Seitenkanten eines rechteckigen Schalters ermöglicht und/oder, der ein Wippen in Richtung bis zu allen, also der einen bis vier Ecken eines rechteckigen Schalters ermöglicht) handeln, und/oder es kann sich um ein Element eines Schalters handeln, der eine berührungssensitive (Teil-) Oberfläche aufweist, und/oder es kann sich um ein Element eines Schalters handeln, der mindestens eine Tastfunktion aufweist. In allen erfindungsgemäßen Fällen weist die Betätigungsfläche die Möglichkeit auf, vom Schaltelement trennbar ausgestaltet zu sein. Dies bedeutet, dass die Eingabefunktionalität in der abtrennbaren Betätigungsfläche verbleibt, während die Funktionalität Stromkreise unmittelbar zu schließen, also das Gerät an- bzw. auszuschalten, bzw. nach Schließen des Stromkreises dem Gerät Steuerungsinformationen zukommen zu lassen, beim mindestens einen Schaltelement verbleibt, wobei jedes Schaltelement des Schalters beim Grundelement verbleibt.
In allen Fällen liegt der hierzu gehörige zusätzliche Verfahrensschritt darin begründet, dass der Bediener die abtrennbare Betätigungsfläche abtrennen muß, bzw. sich des zusätzlichen Geräts erst bemächtigen muß.

So ist weiterhin eine Weiterbildung des erfindungsgemäßen Verfahrens zum Betätigen eines Schalters besonders vorteilhaft, umfassend mindestens eine vom Schaltelement (dieses verbleibt mit dem Grundelement in der Wand) trennbar angeordnete Betätigungsfläche (z.B. Tastatur, oder Schalteroberfläche mit Eingabefunktion), mindestens einen Zwischenspeicher (z.B. in der Form einer Pyramide im Raum, die diverse Betätigungsflächen funktional bündeln kann), wobei in jedem Zwischenspeicher Kommunikationsinformationen für mehr als einen zu steuernden Schalter, und/oder ein zu steuerndes Hausgerät hinterlegt werden können (also alle Schalter bzw. Hausgeräte eines Raums z.B.), wobei sich Betätigungsfläche und Zwischenspeicher und Schaltelement nicht im selben Gehäuse befinden.
Eine weitere Weiterbildung des erfindungsgemäßen Verfahrens zum Betätigen eines Schalters ist besonders weiterhin vorteilhaft, wobei sich der Zwischenspeicher auch nicht im Gehäuse des zu steuernden Geräts befindet.
Dieser Verfahrensschritt der Zwischenschaltung eines Zwischenspeichers ist geeignet, um die Komplexität der Bedienung zu reduzieren. So kann zwar ein jeder Schalter prinzipiell eine unendliche Zahl an Funktionen zugewiesen werden, hierdurch steigt jedoch auch die Komplexität der Bedienung dieses Schalters. Wenn dann ein weiterer Schalter in einem z.B. anderem Raum bzw. ein noch weiterer Schalter ebenfalls individuell programmiert werden, so ist eine zusätzliche Maßnahme zur Reduktion der Bedienkomplexität wünschenswert.
Diesem erfindungsgemäß hinzukommenden Zwischenspeicher kommt daher die Aufgabe zu, von einer Betätigungsfläche abgegebene Steuerungskommandos in einem weiteren Schritt, ebenfalls mit Hilfe von Fernkommunikationsmitteln zu einem oder auch zu mehreren Schaltern/Schaltelementen zu übertragen. Der Zwischenspeicher befindet sich wiederum in mindestens einem anderen Gehäuse als sich die Betätigungsfläche befindet, und auch in einem anderen Gehäuse als sich das Schaltelement befindet. Er kommuniziert mit der Betätigungsfläche und mit dem Schaltelement jeweils mit Hilfe von Fernkommunikationsmitteln. Dies bringt den Vorteil mit sich, dass mit nur einer Tastatur auch zahlreiche Zwischenspeicher angesprochen werden können, wobei jeder dieser Zwischenspeicher individuell auf die sie umgebende Umgebung eingestellt werden kann. Auf diese Weise kann mit Hilfe einer Betätigungsfläche eine Vielzahl von Zwischenspeichern bedient werden, von denen sich jeder z.B. in einem anderen Raum befindet und wobei in jedem der Zwischenspeicher die Schalterbelegungen der Schalter dieses Raums hinterlegt sind.
Wenn sich außerdem der Zwischenspeicher bzw. die Betätigungsfläche in je einem anderen Gehäuse befinden, als das mindestens eine Schaltelement, so bewirkt das, dass die Funktionalität der Betätigungsfläche nicht unmittelbar an den einen einzigen Schalter begrenzt angepasst werden muss, welchen es zu steuern hat. Innovative Schalter, wie z.B. Geräteschalter sind bereits heute als eine Art Fernbedienung in der einen oder anderen Art auf das durch sie zu steuernde Gerät eingestellt, so dass sie eine funktionale Einheit dahingehend bilden, dass sie nur dieses eine individuelle Gerät, z.B. Fernsehgerät, oder diesen einen Typ dieses Geräts, z.B. alle Fernsehgeräte dieses einen Typs oder nur diese eine Marke, z.B. alle Fernsehgeräte der Marke "xy", oder alle Geräte eines Herstellers, z.B. Fernsehgerät, Videogerät, MP3Spieler der einen Marke "xy" oder des einen Herstellers "z" zu steuern in der Lage sind. In all diesen Fällen verbleiben aber die Kommunikationsdaten zum Steuern des betreffenden Geräts in dem Schalter welchen der Bediener auf klassische Weise am bzw. im Gerät oder bei innovativen Geräten in einem externen Bedienterminal vorfindet, die sich bei diesen neuen, innovativen Systemen, z.B. bei so genannten Smart-Homes, in der Wand vorfindet. Letztere sind aber, wie eingangs definiert keine "Schalter" im Sinne der Erfindung, da sie u.a. nicht in eine Norm-UP-Dose passen.
Dies bringt neben der zunehmenden Komplexität den Nahteil mit sich, dass beispielsweise bei Verlust entweder ein teures Originalersatzteil gekauft werden muss oder alternativ alle Steuerdaten in ein neues frei programmierbares Gerät eingelesen und hinterlegt werden müssen.
Wenn sich aber erfindungsgemäß der Zwischenspeicher im anderen Gehäuse befindet, als die Betätigungsfläche, dann ist das Gehäuse, in welchem sich die Betätigungsfläche befindet universell für alle zu steuernden Schalter und damit auch für alle durch diese Schalter zu steuernden Geräte nutzbar, indem sie den Zwischenspeicher und nicht den betreffenden Schalter direkt anspricht, und kann somit leicht ersetzt werden, wenn sie verloren oder kaputt geht. Somit kann alternativ auch eine jede beliebige andere Betätigungsfläche, wie z.B. eine Tastatur genutzt werden, wie beispielsweise die Betätigungsfläche, bzw. Tastatur eines Mobiltelephons, eines PDA, einer Digitaluhr, eines Schlüsselanhängers etc., die hierfür jeweils jedoch lediglich die Funktion ihrer Tastaturen bereitzustellen brauchen. Wesentlich ist nur ihre Fähigkeit der Kommunikation mit dem Zwischenspeicher. Gäbe es diesen erfindungsgemäßen Zwischenspeicher nicht, so müsste diese Betätigungsfläche an jeden Einzelschalter angepasst werden, um mit mehr als einem Einzelschalter zu kommunizieren.
Wie die Übertragung zwischen Tastatur und Zwischenspeicher geschehen kann, weiß der Fachmann (Kabel, Funk, IR, etc.). Der Zwischenspeicher und nicht etwa die von dem Schalter trennbare Betätigungsfläche dient erfindungsgemäß dem Zweck der Bereitstellung von Steuerinformationen für den jeweils anzusprechenden Schalter, Nicht die unmittelbar bediente Betätigungsfläche, sondern der Zwischenspeicher stellt also die Wirkung bereit, die anzusprechenden diversen Schalter unmittelbar anzusprechen. Die Betätigungsfläche selbst ist hierzu nicht in der Lage. Sie kommuniziert jedoch unmittelbar mit dem Zwischenspeicher und lediglich mittelbar mit Hilfe des Zwischenspeichers mit dem zu steuernden Schalter.
Der Zwischenspeicher kann hierbei auch eine eigene handelsübliche frei programmierbare Fernbedienung sein, so lange er diese beschriebenen Funktionen erfüllt.
Die erfindungsgemäße abnehmbare Betätigungsfläche bringt den Vorteil mit sich, eine für "Fernedienungen" ungewöhnliche Effizienz zu erreichen. Für den Fall, dass sich beispielsweise in jedem Raum ein solcher Zwischenspeicher befindet und für den Fall, dass durch die Schaltelemente nicht nur die Stromversorgung der einzelnen Geräte geschalten werden kann, sondern dass auch die einzelnen Funktionen der ausgesteuerten Hausgeräte durch diese Schaltelemente gesteuert werden können, ist es beispielsweise möglich mit ein und der selben Taste für die Steuerung der Lautstärke auf der abnehmbaren Betätigungsfläche in einem ersten Raum beispielsweise die Lautstärke der HiFi - Anlage und in einem anderen Raum die Lautstärke des Computer, bzw. des für die Lautstärke zuständigen Software auf dem Computer, und wieder in einem anderen Raum die Lautstärke des Fernsehers zu steuern. Diese vorteilhafte effiziente Bedienung ergibt sich immer dann, wenn der Zwischenspeicher in dem jeweils anderen Raum so programmiert wurde, dass er ein jeweils anderes zu steuerndes Gerät mit der selben Lautstärkentaste der Betätigungsfläche verknüpft. Alternativ müsste der Bediener in jedem z.B. Raum erneut alle Menüpunkte durchwandern, bis er im Menü die Stelle der Lautstärke gefunden hat.
Im letzten Fall gilt, dass die An - und Abmeldung der Geräte bzw. der Schalter an dem Zwischenspeicher oder im Fall, dass, im Fall dass nur eine lokale Bedienung erwünscht ist, kein Zwischenspeicher vorgesehen ist, auch die An - und Abmeldung der Betätigungsfläche an den Schaltern direkt mit Hilfe der Übersendung von Informationen via Fernkommunikationsmitteln, wie Funk und / oder Infrarot auf einer kurzen Distanz von je nach Anwendung bis zu drei Metern zwischen der Betätigungsfläche und jeweiligen Zwischenspeichern bzw. Schaltern erfolgt. Dies bewirkt, dass eine Anmeldung nur möglich ist, wenn diese auf einer definierten kurzen Distanz zum anzumeldenden Gerät erfolgt, um somit Störungen der Geräte untereinander bzw. mit dem Zwischenspeicher zu vermeiden. Die im Rahmen der Anmeldeprozedur über kurze Distanz übermittelte Information an den Zwischenspeicher bewirkt eine Akzeptanz der Betätigungsfläche mit der Folge, dass sodann jeder Steuerungsbefehl z.B. von dem Zwischenspeicher - auch aus großen Distanzen - ausgeführt wird. Hierdurch kann die Anmeldung der Geräte an dem Zwischenspeicher sowohl durch eine automatische Erkennung einerseits, als auch durch individuelles Eintragen der Daten in den Zwischenspeicher mit Hilfe der Betätigungsfläche anderseits erfolgen, oder sie können als dritte Lösung bereits voreingetragen sein. Alternativ ist auch eine Anmeldung so eingestellt werden, dass gezielt nur bei kurzen Entfernungen die Tastatur der Betätigungsfläche angesprochen wird. Vorteil einer derartigen erfindungsgemäßen Betätigungsfläche ist also, dass diese Betätigungsfläche nicht nur über einen Zwischenspeicher eine Vielzahl von Schaltern ansprechen kann, sondern auch ohne einen Zwischenspeicher sich eine Betätigungsfläche eines ersten Schalters sich bei einem weiteren erfindungsgemäßen Schalter, deren Betätigungsfläche nicht abgenommen wurde anzumelden in der Lage ist, um diesen dann fernzubedienen, ohne dass deren Betätigungsfläche abgenommen wurde. In erstem Fall, bei existierenden Zwischenspeichern ist über die Programmierung der Zwischenspeicher sichergestellt, dass egal welcher Zwischenspeicher durch die Betätigungsfläche angesprochen wird, die jeweilige Funktionstaste auf der Betätigungsfläche (z.B. die Lautstärke) auch immer genau diese Funktion (Lautstärke) bei dem jeweiligen Gerät (TV im Erdgeschoß; Computer im Obergeschoß) anspricht. Wenn im zweiten Fall die Betätigungsfläche den Schalter direkt anspricht, muß diese Definition zuvor im jeweiligen Schalter selbst erfolgt sein.
Wenn sich außerdem der Zwischenspeicher im anderen Gehäuse befindet, als die Betätigungsfläche, so bewirkt das, dass die Betätigungsfläche nicht an das Gerät angepasst werden muss, welches es zu steuern hat.
Gängige Fernbedienungen sind in der einen oder anderen Art so auf das zu steuernde Gerät eingestellt, dass sie eine funktionale Einheit dahingehend bilden, dass die Fernbedienung nur dieses eine individuelle Gerät, z.B. Fernsehgerät, oder diesen einen Typ dieses Geräts, z.B. alle Fernsehgeräte dieses einen Typs oder nur diese eine Marke, z.B. alle Fernsehgeräte der Marke xy, oder alle Geräte eines Herstellers, z.B. Fernsehgerät, Videogerät, MP3Spieler der einen Marke xy oder des einen Herstellers z zu steuern in der Lage sind. Die flexibelste Lösung stellen bisher frei programmierbare Fernbedienungen dar, in welchen jedoch ebenfalls die Kommunikationsdaten des zu steuernden Geräts eingegeben werden müssen. In allen Fällen verbleiben die Kommunikationsdaten zum Steuern des betreffenden Geräts in der Fernbedienung, welche der Bediener in der Hand hält. Dies bringt den Nahteil mit sich, dass beispielsweise bei Verlust entweder ein teures Originalersatzteil gekauft werden muss oder alternativ alle Steuerdaten in ein neues frei programmierbares Gerät eingelesen und hinterlegt werden müssen.
Wenn sich aber erfindungsgemäß der Zwischenspeicher im anderen Gehäuse befindet, als die Betätigungsfläche und auch in einem anderen Gehäuse als das zu steuernde Gerät, dann ist das Gehäuse, in welchem sich die Betätigungsfläche befindet universell für alle zu steuernden Geräte nutzbar und kann leicht ersetzt werden, wenn es verloren oder kaputt geht, oder es kann eine jede beliebige Betätigungsfläche, wie z.B. eine Tastatur ebenfalls genutzt werden, wie beispielsweise die Betätigungsfläche, bzw. Tastatur eines Mobiltelephons, eines PDA, einer Uhr, eines Schlüsselanhängers etc., die lediglich die Funktion ihrer Tastaturen bereitzustellen brauchen. Wesentlich ist nur die Fähigkeit der Kommunikation mit dem Zwischenspeicher. Dies kann geschehen, indem diese Geräte keine zielgerätespezifischen Daten erhalten, sondern lediglich so zusagen die Funktion ihrer Tastatur bereitstellen, welche dann vom Zwischenspeicher wahrgenommen werden kann. Wie die Übertragung zwischen Tastatur und Zwischenspeicher geschehen kann, weiß der Fachmann (Kabel, Funk, IR, etc.).
Der Zwischenspeicher dient daher mittelbar dem Zweck der Bereitstellung von Steuerinformationen für das Gerät. Auch dies ist ein wesentlicher Unterschied zu bestehenden Fernbedienungen im Haushalt. Nicht die Betätigungsfläche, sondern der Zwischenspeicher stellt die Wirkung bereit die zu steuernden Schalter unmittelbar anzusprechen. die Betätigungsfläche selbst ist hierzu nicht in der Lage. Es kommuniziert jedoch unmittelbar mit dem Zwischenspeicher und lediglich mittelbar mit Hilfe des Zwischenspeichers mit dem zu steuernden Schalter Diese zentrale Wirkung wird von allen erfindungsgemäßen Ausführungsformen bereitgestellt.

So ist weiterhin eine Weiterbildung des erfindungsgemäßen Verfahrens zum Betätigen eines Schalters besonders vorteilhaft, wobei durch den Zwischenspeicher eine Verwaltungseinheit definiert werden kann.
Wenn eine erfindungsgemäße Fernbedienung, die einzige Betätigungsfläche, aber mehr als einen Zwischenspeicher umfasst und durch den Zwischenspeicher eine Verwaltungseinheit definiert werden kann, bewirkt dies, dass der Bediener sich die Verwaltungseinheiten nach eigenem Belieben selbst gestalten kann. Dies kann realisiert werden, indem beispielsweise jedem zu bedienenden Raum / Bereich einem Zwischenspeicher zugeordnet ist. So kann der Bediener beispielsweise einer Wohnküche, die klassisch Schalter bzw. Geräte für die Küche aufweist und unabhängig hiervon Schalter bzw. Geräte für den Wohnbereich aufweist als einen einzigen Verwaltungsbereich definieren und in einem einzigen Zwischenspeicher hinterlegen und diesen Bereich der Wohnküche hierdurch als einen einzigen Verwaltungseinheit definieren. Betritt der Bediener diese Verwaltungseinheit, kann sich die mobile Betätigungsfläche bei der lokalen Fernbedienung dann automatisch an - und abmelden.

So ist weiterhin eine Weiterbildung des erfindungsgemäßen Verfahrens zum Betätigen eines Schalters besonders vorteilhaft, wobei die Kommunikation zwischen Schalter und Betätigungsfläche mit Hilfe des Zwischenspeichers und mit Hilfe von Fernkommunikationsmitteln abgewickelt wird.
Wenn die Kommunikation zwischen Schalter und Betätigungsfläche mit Hilfe des Zwischenspeichers und mit Hilfe von Fernkommunikationsmitteln abgewickelt wird, so bringt dies den Vorteil mit sich, dass der Zwischenspeicher an einer beliebigen Stelle aufgestellt werden kann. Dies bewirkt eine große Flexibilität in dessen Postierung. So ist es beispielsweise gleichgültig, ob er näher an einem oder weiter von einem anderen zu steuernden Gerät entfernt ist.
Wenn der Datenaustausch zwischen Zwischenspeicher und de Betätigungsfläche mit Hilfe von Femekommunikationsmitteln abgewickelt wird, so bringt dies den weiteren Vorteil mit sich, dass der Bediener mobil bleibt und dass er die betreffende die Betätigungsfläche immer mit sich herumtragen kann.

So ist weiterhin eine Weiterbildung des erfindungsgemäßen Verfahrens zum Betätigen eines Schalters besonders vorteilhaft, wobei die Betätigungsfläche durch einen Personal Digital Assistent bereitgestellt wird.
Bei gegebener Eignung zur Fernkommunikation könnte auch ein PDA bzw. ein mobiles Telephon, Smartphone, oder eine eigene Fernbedienung oder vergleichbare Geräte, die ihre reine Eingabefunktion bereitzustellen in der Lage sind, diese ihre reine Eingabefunktion bereitstellen, und die über diese getätigten Eingaben an das jeweilige Schaltelement des Schalters, der auf die erfindungsgemäße Weise betrieben wird, weitergeben.
Der Einsatz eines derartigen Geräts an dieser Stelle steht nicht im Widerspruch zur eingangs gemachten Abgrenzung, da diese Geräte, wie z.B. der PDA lediglich ihre Eingabefunktion bereitstellen, um das Eingegebene per Fernkommunikationsmittel zum erfindungsgemäßen Schalter zu übertragen. Das gleiche gilt natürlich auch für den Fall, wenn bei gegebener Eignung zur Fernkommunikation ein mobiles Telephon oder eine eigene Fernbedienung oder vergleichbare alternative Geräte, die ihre reine Eingabefunktion bereitzustellen in der Lage sind.
Diese ersetzen also physisch die abtrennbare Betätigungsfläche und stellen ihre reine Eingabefunktion zur Verfügung. Physisch könnte zwar die abtrennbare Betätigungsfläche in einem solchen Fall des Ersetzens am Schaltelement angedockt bleiben; aus Sicht des Schaltelements macht es jedoch keinen Unterschied, ob die abnehmbare Betätigungsfläche tatsächlich mit Hilfe der Fernkommunikationsmittel mit dem Schaltelement kommuniziert, oder sich ein weiteres Element, nämlich der PDA bzw, das mobiles Telephon oder eine eigene Fernbedienung des selben Fernkommunikationsmittels bedient, dessen sich die abtrennbare Betätigungsfläche bedient hätte, egal ob es unmittelbar kommuniziert, oder über den Zwischenspeicher.
Wenn die Betätigungsfläche durch einen Personal Digital Assistent funktional ersetzt wird, so bringt dies den Vorteil mit sich, dass eine Vorrichtung, welche sich bereits in zahlreichen Haushalten befindet, einem zusätzlichen Zweck dient, was die Anzahl im Haushalt befindlicher Einzelgeräte reduziert und hierdurch die Übersichtlichkeit erhöht. Alternativ können wie gesagt auch Tastaturen von z.B. Mobiltelephonen etc. herangezogen werden.

So ist weiterhin eine Weiterbildung des erfindungsgemäßen Verfahrens zum Betätigen eines Schalters besonders vorteilhaft, wobei jeder Verwaltungseinheit ein lokaler Zwischenspeicher zugeordnet ist, der Steuerungskommandos der Verwaltungseinheit enthalten kann.
Wenn jeder Verwaltungseinheit eine solche Betätigungsfläche zugeordnet ist, die Steuerungskommandos von der Betätigungsfläche erhalten kann, so bewirkt dies, dass jede Verwaltungseinheit eine eigene Betätigungsfläche aufweisen kann, welche darauf beschränkt ist, eine Steuerung nur dieser einen Verwaltungseinheit zu bewirken. Die Anpassung dieser einen lokalen Betätigungsfläche an diese jeweilige Verwaltungsfläche kann neben den oben skizzierten Möglichkeiten auch so erfolgen, dass sie diejenigen Daten aus dem Schalter bzw. Zwischenspeicher auf sich überträgt, welche zur Steuerung der betreffenden Verwaltungseinheit notwendig sind. Hierdurch kann eine aufwendige Programmierung bzw. ein neues Einlesen von Daten vermieden werden. In jedem Fall stellt die Betätigungsfläche weiterhin lediglich ihre Eingabefunktion zur Verfügung.

So ist weiterhin eine Weiterbildung des erfindungsgemäßen Verfahrens zum Betätigen eines Schalters besonders vorteilhaft, wobei die An - und Abmeldung einer mobilen Betätigungsfläche nach Identifizierung des Nutzers bei der lokalen Betätigungsfläche mittels eines Codes und/oder durch Tastendruck und/oder durch Stimmerkennung und/oder eine andere Zutrittshürde erfolgt.
Wenn die An - und Abmeldung der mobilen Betätigungsfläche nach Identifizierung des Nutzers bei der lokalen Fernbedienung mittels einem Code oder durch Tastendruck oder durch Stimmerkennung oder eine andere Methodik erfolgt, so bringt dies den Vorteil mit sich, dass nur eine definierte Person die Betätigungsfläche benutzen kann. Dies gilt sowohl für die Betätigungsfläche, welche alle Geräte steuert, als auch für möglicherweise zusätzlich einzusetzende Fernbedienungen. Durch derart personalisierte Betätigungsflächen bzw. Fernbedienungen kann beispielsweise verhindert werden, dass unerwünschte Personen Zugriff auf die zu steuernden Geräte erhalten, die sie nicht betreffen, so kann beispielsweise Kindern der Zugriff auf den Herd oder den Fernseher verwehrt werden.

So ist weiterhin eine Weiterbildung des erfindungsgemäßen Verfahrens zum Betätigen eines Schalters besonders vorteilhaft, wobei die Hausgeräte bzw. Schalter Daten zu deren Steuerung bereitstellen.
Auf diese Weise können Hausgeräte diese Daten an den diese Hausgeräte schaltenden Schalter weiterleiten, der diese Daten dann per Fernkommunikationsmittel an den Zwischenspeicher weiterleitet. Hierdurch wird eine automatische Anmeldung dieser Geräte am Zwischenspeicher ermöglicht.

So ist weiterhin eine Weiterbildung des erfindungsgemäßen Verfahrens zum Betätigen eines Schalters besonders vorteilhaft, wobei sich der Zwischenspeicher 6 selbständig die Daten der Hausgeräte bzw. Schalter zu deren Steuerung einliest.
So ist weiterhin eine Weiterbildung des erfindungsgemäßen Verfahrens zum Betätigen eines Schalters außerdem noch besonders vorteilhaft, wobei das Einlesen nur erfolgt, wenn ein zuvor definierbarer Abstand zum Hausgerät bzw. Schalter unterschritten wurde.
Auf diese Weise können diese Daten von Hausgeräten durch den Zwischenspeicher direkt eingelesen werden. Werden diese Daten von den Hausgeräten zu dem sie betreffenden Schalter weitergeleitet, können sie natürlich auch vom Schalter aus eingelesen werden. Hierdurch ist es möglich, daß der Zwischenspeicher auf einfache Weise programmiert wird, indem er genau die Daten derjenigen Geräte einzulesen bekommt, welche er dann auch steuern soll. Beispielsweise kann ein erfindungsgemäßer Zwischenspeicher in die Nähe eines einzulesenden Schalters gehalten werden, der hierdurch die Daten dieses Schalters einliest, also die Gerätedaten, welche in den jeweiligen Menüpunkten an genau diesem Schalter hinterlegt sind, dann die eines zweiten Schalters und dann ggf. die eines noch weiteren Schalters. Diese erfindungsgemäßen Einordnung kann dadurch erreicht werden, indem sich die zu steuernden Schalter selbst bei dem Zwischenspeicher anmelden, indem erstere der zweiten beispielsweise eine Geräteziffer übermitteln.
Hierdurch ist der erfindungsgemäße Zwischenspeicher dann in er Lage die gesamte Funktionsbreite dieser Schalter zu repräsentieren. Eine Komplexitätsreduktion tritt dann dadurch ein, indem der Bediener mit dieser Betätigungsfläche durch die eingelesenen Räume sich bewegt und dann an der Betätigungsfläche ohne die jeweiligen Menüs der jeweiligen Einzelsachalter erneut durchlaufen zu müssen, wenn er in jedem Raum beispielsweise die Lautstärke reduzieren will, oder die Lichtverhältnisse ändern will, da er sich dann in jedem Raum sofort im zugehörigen Untermenüpunkt befindet und die gewünschte Funktion an der Bedienfläche unmittelbar auslösen kann.
Sie kann außerdem erreicht werden, indem sich dann die mit Hilfe ihrer Daten in dem Zwischenspeicher hinterlegten Geräte bei der Betätigungsfläche anmelden, sobald die Betätigungsfläche in die Nähe des Zwischenspeichers kommt. Eine solche Anmeldung könnte beispielsweise geschehen, indem auf Knopfdruck die Betätigungsfläche sich die in der Nähe befindlichen Geräte melden, indem der Zwischenspeicher diese Daten, oder andere Daten mit der gleichen eindeutigen Wirkung, bei der Betätigungsfläche anmelden.
Eine solche Anmeldung könnte aber auch so geschehen, dass die Entfernung der Betätigungsfläche zum Zwischenspeicher oder zum zu steuernden Gerät als Parameter dient, dass genau dieses das aktuell zu steuernde Gerät ist. In jedem Zwischenspeicher können so Kommunikationsinformationen für mehr als ein zu steuernden Schalter, bzw. Hausgerät, hinterlegt werden. In jedem Zwischenspeicher ist so die ihn umgebende Umgebung an Hausgeräten derart abgebildet, dass der Zwischenspeicher von allen in dieser Umgebung befindlichen relevanten Geräten Steuerungskommandos umfasst. In diesem Fall würden die einzutragenden Schalter einen eigenen Code ausenden, mit dessen Hilfe sie im Zwischenspeicher angemeldet und eingetragen werden können. Im alternativen Fall müssten dem Bediener die Daten bekannt sein, mit deren Hilfe die Schalter angesprochen werden können, wie beispielsweise die bedienbaren Funktionen und beispielsweise die Frequenzen, in welchen das zu steuernde Gerät Kommunikationsinformationen empfangen kann. In einem dritten Fall muss eine Einprogrammierung vor der Auslieferung an den Kunden erfolgen. Dies ist jedoch nicht notwendig, wenn die oben beschriebene automatische Anmeldeprozedur korrekt abgewickelt wird.

Neben dieser Funktion des "Lokaltaster" kann das Verfahren auch einen automatischen Verfahrensschritt aufweisen, der ein Rücksetzen bewirkt, indem bei einer Nichtbetätigung des Schalters, insbesondere Lichtschalters von länger als einem vordefinierten Zeitraum automatisch der Grundzustand des Schalters, insbesondere Lichtschalters wiederhergestellt wird. Der Grundzustand ist der Zustand des Schalters, den der Bediener diesem als Dauerzustand verleiht und in dem er den Schalter vorzufinden wünscht, wenn er den betreffenden Raum, in dem sich der Schalter befindet, betritt, meist also der in Anspruch 6 beschriebene Zustand.
Hierdurch wird bewirkt, daß wenn ein Schalter für eine längere Zeitspanne, als sie in der Grundeinstellung hinterlegt wurde, nicht betätigt wurde, dieser Schalter in seinen in der Grundeinstellung hinterlegbaren Grundzustand zurückfällt. Dies sind beispielsweise für Schalter in der Nähe einer Türe vorzugsweise die Beleuchtungsfunktion und für Schalter an der Eingangstüre vorzugsweise die Sicherheitsfunktion. Gute Erfahrungen wurden gemacht, wenn dieser Zeitraum mehr als 30 Sekunden beträgt.

In einem weiteren Verfahrensschritt können alle Verbraucher der Gruppe ausgeschaltet werden. Gute Ergebnisse wurden insbesondere erzielt, wenn die Zeitdauer des hierfür notwendigen Impulses im wesentlichen der selben Zeitdauer entspricht, wie die in der Grundeinstellung hinterlegte Zeitdauer für das Einschalten, wenn also der Ausschaltklick im wesentlichen genauso lange dauert, wie zuvor der Einschaltklick.

Natürlich ist es jederzeit möglich, mindestens eine Verfahrensschritt vor- bzw. zurückzuschreiten, bzw. mindestens einen Verfahrenschritt sowohl vor, als auch zurück zu überspringen. Derartige Schritte sind beim erfindungsgemäßen programmierbaren Schalter jederzeit programmierbar und der Bediener kann diese Funktionen an einer beliebige Stelle des Schalters bzw. einer beliebigen Signalfolge hinterlegen.

Geeignet sind auch moderne, in eine Norm-Unterputzdose passende, Schalter, wobei der Schalter eine berührungssensitive Oberfläche umfasst, die einen beliebig großen Teil ihrer Oberfläche als Betätigungsfläche vorsieht, die geeignet ist, im Schalter eine An-Aus-Schaltwirkung und/oder eine Dauersignalwirkung bereitzustellen. Diese Schalter sind darüber hinaus auch geeignet, durch eine Berührung der Schalteroberfläche mit Antippcharakter die An-Aus-Schaltwirkung und/oder durch eine Berührung der Schalteroberfläche mit Streichcharakter eine Dauersignalwirkung bereitzustellen. Weiterhin sind diese Schalter geeignet, jeder dieser Antippdauern und/oder Antippfolgen die Beschaltung eines anderen Verbrauchers und/oder Gruppe von Verbrauchern zuzuordnen, wobei der Schalter geeignet ist, bei der Berührung der Schalteroberfläche mit Antippcharakter unterschiedliche Antippdauern und/oder Antippfolgen zu identifizieren. Darüber hinaus sind diese Schalter geeignet, bei der Berührung der Schalteroberfläche mit Streichcharakter unterschiedliche Streichrichtungen und/oder Streichsymbole zu identifizieren und geeignet, jeder dieser Streichrichtungen und/oder Symbole die Auswahl einer Gruppe von Verbrauchern und/oder innerhalb einer solchen Gruppe einer Untergruppe, bzw. eines einzelnen Verbrauchers und/oder bei einem einzelnen Verbraucher dessen Funktionen und/oder bei einer dieser Funktionen eines Verbrauchers die mit Hilfe der menschlichen Sinne vernehmbare Intensität der Wirkung dieses Verbrauchers zuzuordnen. Besonders geeignet sind derartige Schalter, wenn sie geeignet sind, in der Nähe der Ecken und/oder in der Nähe der Kanten und/oder im Zentrum, jedenfalls immer da wo sie betätigbar sind und Schaltfunktionen ausüben, zeitlich aufeinanderfolgend unterschiedliche Farben, insbesondere die LED-R-G-B-Farben, darzustellen. Ergänzend oder alternativ können bei dieser Stelle auch Symbole, wie z.B. Piktogramme in Erscheinung treten. Besonders hilfreich ist es, wenn diese Orte auf der berührsensitiven Oberfläche mit den zugeghörigen Darstellungen durch Berühren an eine andere Stelle dieses Schalters verschoben werden können, beispielsweise durch eine Streichbewegung auf dieser berührsensitiven Oberfläche, wobei das aktuelle Symbol bei Erstberührung aufgenommen wird, durch die Streichbewegung korrespondierend verfrachtet wird und an der Stelle des Loslassens hinterlegt wird. So kann auf besonders einfache und effiziente Weise eine Schalterbelegung erfolgen. Diese auf der Oberfläche erscheinenden Symbole können auch (z.B. für ältere Personen) vergrößert und verkleinert werden, indem man das betreffende Symbol mit zwei Fingern berührt und damit aufnimmt und den Abstand zwischen diesen beiden Fingern vergrößert, was eine Vergrößerung dieses Symbols bewirkt. Eine Verkleinerung erfolgt in umgekehrter Weise.
Umfasst sind hiermit auch Schalter, die sowohl mindestens ein relativ zu einem Grundelement bewegbares Schaltelement, als zusätzlich mindestens ein zu einem Grundelement stationäres Schaltelement aufweisen. Eine Ausgestaltungsform hierfür könnte ein Modell sein .welches eine Tast oder Wippbewegung in die x bzw. --x Richtung, und/oder in die y bzw. --y Richtung, und/oder in die Richtung der einen bis vier Diagonalen und/oder eine Tastbewegung in das Zentrum des Schalters erlaubt, dessen Oberfläche, bzw. Teile von dessen Oberfläche, aus als Betätigungsfläche bezeichnet, außerdem berührsensitiv ist und hierdurch z.B. Streichbewegungen als eigene Infornmationskategorie zu interpretieren in er Lage ist.

Selbstverständlich ist die geschilderte Verfahrensweise unabhängig davon, auf welche Weise die Informationen vom Schalter zum Verbraucher gelangen. Dies kann über die Stromleitung, per Funk, über ein Bussystem, eigenen lnformationsleitungen, oder auf eine andere dem Fachmann geläufige Weise geschehen.

Die mögliche Gestalt eines Schalters, welcher zur Durchführung des erfindungsgemäßen Verfahrens besonders geeignet ist, sowie ein möglicher Verfahrensablauf ist aus den Figuren ersichtlich.

Hierbei zeigen
- Fig. 1.: einen Schalter 1, welcher für das erfindungsgemäße Verfahren besonders geeignet ist, mit abnehmbarer Betätigungsfläche 4;
- Fig. 2.: eine Mehrzahl von Schaltern 1, welche für das erfindungsgemäße Verfahren besonders geeignet ist, mit abnehmbarer Betätigungsfläche 4, die über einen Zwischenspeicher 6 untereinander kommunizieren;
- Fig. 3.: ein mögliche Abfolge von Verfahrensschritten.

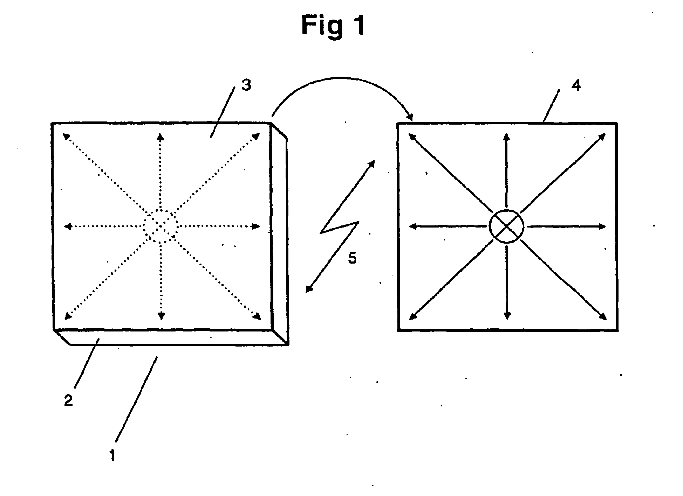

Fig. 1 zeigt einen Schalter 1, der auch ein Taster sein kann, umfassend ein Grundelement 2, auch oft als Trägerelement bezeichnet, ein einziges zu bedienendes, Betätigungselement/Bedienelement 3, oft auch aufgrund seiner Funktion als Schaltelement bezeichnet, umfassend mindestens eine, Betätigungsfläche 4, welche beweglich auf dem Betätigungselement/Bedienelement 3 bzw. hierdurch auf dem Trägerelement angebracht ist/sind und vorliegend z.B. in die Diagonalen, die Vertikale, die Horizontale bewegbar ist, sowie im Zentrum drückbar ist, was durch die gestrichelten Pfeile, sowie durch das gestrichelte Kreuz angedeutet ist. Die Betätigungsfläche 4 ist somit erfindungsgemäß relativ zum Trägerelement in mindestens drei Dimensionen und damit in neun Schaltrichtungen bewegbar, worunter bei diesem vorliegenden rechteckigen Schalter 1 beispielhaft als eine Richtung die Schaltrichtung rechts/links, als eine weitere Richtung die Schaltrichtung oben/unten, als eine noch weitere Schaltrichtung das Drücken in das Zentrum des Schalters 1 und außerdem aber auch das Betätigen der Diagonalen, also der Ecken des Schalters 1 in Frage kommen. In einer alternativen Ausgestaltung könnte man diese neun Dimensionen auch durch Nummern belegen, wodurch der Schalter 1 eine Fernbedienungserscheinung erhält. Jede Betätigung des Betätigungselements/Bedienelements 2 bewirkt mindestens einen Schaltvorgang (weswegen das Betätigungselements/Bedienelements 3 und Schaltelement 3 als Synonyme verwendet werden) und bewirkt hierdurch für mindestens einen Verbraucher oder mindestens einer Gruppe von Verbrauchern die Vorauswahl einer Gruppe von Verbrauchern. Sämtliche Schaltvorgänge für den mindestens einen Verbraucher oder für die mindestens eine Gruppe von Verbrauchern sind durch lokale Betätigung des Betätigungselements/Bedienelements auslösbar.
Das Bedienelement 4 ist im vorliegenden Ausführungsbeispiel vom Betätigungselement/Bedienelement 3 abnehmbar gestaltet und durch Fernkommunikationsmittel 5 mit dem Schaltelement 3 verbunden. Am Bedienelement werden durch den Bediener die Bedienfunktionen ausgeführt.

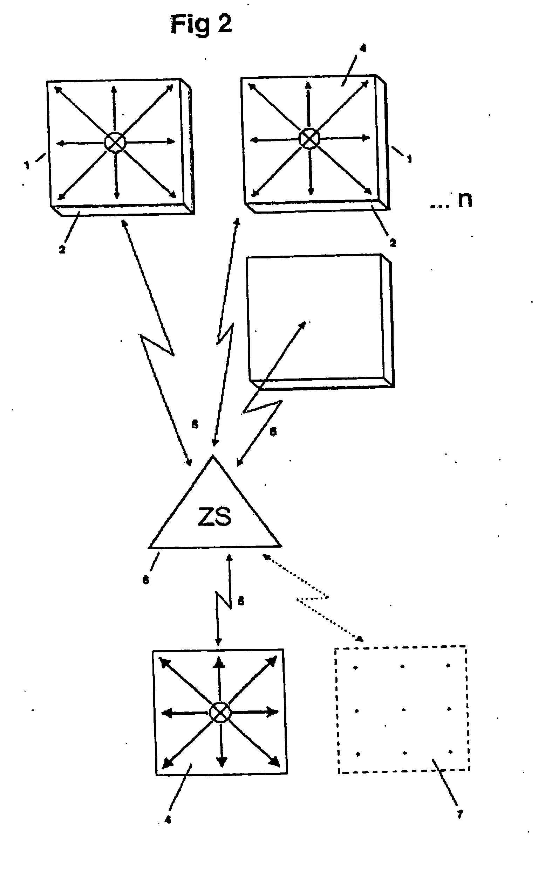

Fig. 2. zeigt eine Mehrzahl von Schaltern 1 (n Schaltelemente 3), welche für das erfindungsgemäße Verfahren besonders geeignet sind, mit ggf. abnehmbarem Bedienelement, die über einen Zwischenspeicher 6 untereinander kommunizieren. Ein Bedienelement kommuniziert über den Zwischenspeicher 6 mit einer Vielzahl Schaltern 1. Darüber hinaus ist angedeutet, daß das Bedienelement durch eine Vorrichtung 7 ersetzbar ist, welche ihre Tastaturfunktion bereitstellt. Dies kann beispielsweise ein PDA oder Mobiltelephon sein.

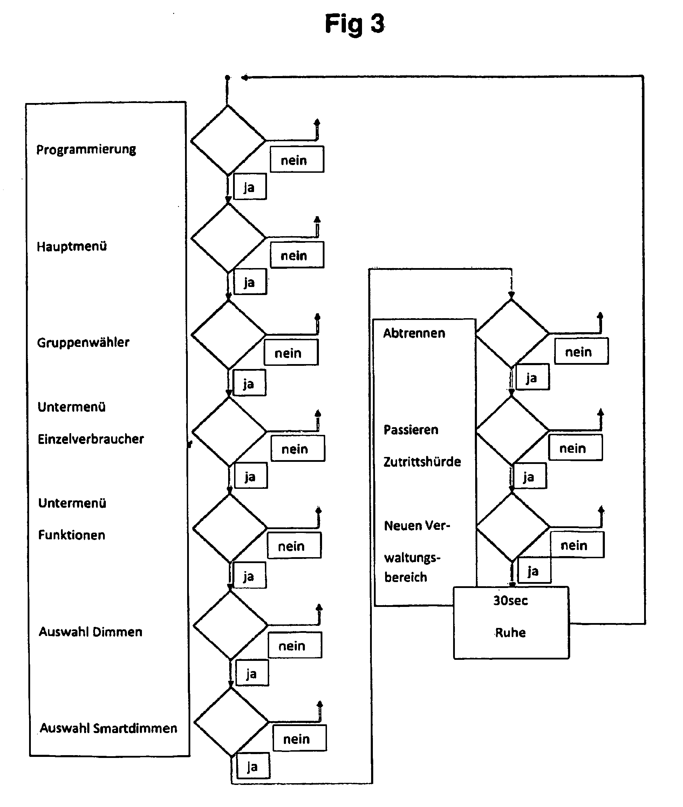

Fig. 3 zeigt eine mögliche Abfolge von Verfahrensschritten. Dieser Abfolge folgend durchschreitet der Bediener in folgender Reihenfolge die Verfahrensschritte:
1. Programmierung des Schalters 1 (z.B. im Wohnzimmer);
2. Durchschreiten der Verbrauchergruppen des Hauptmenüs (z.B. der Gruppen Licht; HiFi; Klima; Sicherheit);
3. Aktivieren der ausgewählten Verbrauchergruppe (z.B. Licht);
4. Durchschreiten der Einzelverbraucher, aufgelistet im Untermenü der ausgewählten Verbrauchergruppe und Aktivieren des interessierenden Einzelverbrauchers (z.B. Leselampe);
5. Durchschreiten der aktivierten Einzelfunktionen des Verbrauchers, aufgelistet im Untermenü des ausgewählten Einzelverbrauchers und Manipulieren des interessierenden Einzelfunktion (z.B. Dimmen aktivierbar z.B. durch ein Streichen von oben nach unten auf der berührsensitiven Oberfläche);
6. Aktivieren der im Menü vorgeschlagenen Funktion des Smart Dimmens, (es werden alle anderen umgebenden Lichtquellen Schritt für Schritt abgeschalten);
7. Abtrennen der Betätigungsfläche 4 (um diese mit in den Lesestuhl unter die Leselampe mitzunehmen);
8. Passieren einer Zutrittshürde (um Zutritt in den Bedienmodus zu erhalten);
9. Definition eines neuen Verwaltungsbereichs (indem eine beim Lesen störende Lampe im Gang mit in die Funktion des Smart Dimmens aufgenommen wird, sowie Hinzunahme eines gewissen Senders mit einer zugehörigen Lautstärke, die beide das Lesen fördern und stimmungsvoll untermalen);
10. Ruhenlassen von 30sec, wodurch der Ausgangszustand des Schalters 1 automatisch wieder eingenommen wird.

## Patentansprüche

1. Verfahren zum Betätigen eines Schalters 1, der mindestens ein relativ zu einem, insbesondere in einer Unterputzdose aufnehmbare, Grundelement 2, bewegbares Schaltelement 3 und/oder mindestens ein zu diesem Grundelement 2 stationäres Schaltelement 3 umfasst, wobei das Schaltelement 3 geeignet ist, mindestens ein Dauerschaltsignal abzugeben, **dadurch gekennzeichnet, daß** die Eigenschaften sowie die Wirkungen dieses mindestens einen Dauerschaltsignals durch den Bediener des Schalters 1 in einem ersten Verfahrensschritt frei definierbar sind, indem der Bediener bei diesem ersten Verfahrensschritt zuerst in den Programmiermodus eintritt und in diesem Programmiermodus zuerst mindestens ein derartiges Dauerschaltsignal, dessen Dauer bzw. dessen Gestalt durch den Bediener des Schalters frei definierbar ist, definiert, wobei nach dieser Definition in einem weiteren Schritt dieses Signal mindestens einem einzigen Verbraucher und/oder mindestens einer Gruppe von Verbrauchern zugeordnet werden.

2. Verfahren zum Betätigen eines Schalters 1 gemäß Anspruch 1, wobei im Programmiermodus der Impuls und/oder das Dauerschaltsignal definiert werden, indem der Schaltimpuls durch eine frei definierbare Länge eines ersten Zeitintervalls festgelegt wird, und indem das Dauerschaltsignal durch eine frei definierbare Länge eines zweiten Zeitintervalls festgelegt wird und indem die maximale Länge der Pause zwischen diesen festgelegt wird.

3. Verfahren zum Betätigen eines Schalters eine in der zuvor genannten Ansprüche, wobei Dauern bis um die 800 Millisekunden als erstes Zeitintervall interpretiert werden und wobei die Dauern darüber als Dauersignal interpretiert werden.

4. Verfahren zum Betätigen eines Schalters 1 gemäß einem der zuvor genannten Ansprüche, wobei ein Schwellwert als zeitliche Untergrenze definierbar ist von der ab eine Zeitdauer bis um die 800 Millisekunden als erstes Zeitintervall interpretiert wird und wobei die Zeiten darüber als Dauersignal interpretiert werden.

5. Verfahren zum Betätigen eines Schalters 1 gemäß Anspruch 4, wobei Dauern unterhalb dieses Schwellwerts als drittes Zeitintervall interpretiert werden.

6. Verfahren zum Betätigen eines Schalters 1, gemäß Anspruch 5 wobei der Schwellwert im Wesentlichen bei 100 Millisekunden liegt.

7. Verfahren zum Betätigen eines Schalters 1, gemäß einem der zuvor genannten Ansprüche, wobei die Dauer einer Pause kleiner als im Wesentlichen eine Sekunde ist.

8. Verfahren zum Betätigen eines Schalters 1, gemäß einem der zuvor genannten Ansprüche, wobei Dauern oberhalb der definierten Pausendauern als Befehl interpretiert werden, dass die Eingabe abgeschlossen ist.

9. Verfahren zum Betätigen eines Schalters 1, gemäß Anspruch 7, wobei die Dauer der Pause 80-150 Millisekunden beträgt.

10. Verfahren zum Betätigen eines Schalters 1 gemäß einem der zuvor genannten Ansprüche, wobei der Schalter 1 mindestens eine berührungssensitive Oberfläche umfasst, wobei diese berührungssensitive Oberfläche im Schalter 1 eine An-Aus-Schaltwirkung und/oder eine Dauersignalwirkung bereitzustellen in der Lage ist.

11. Verfahren zum Betätigen eines Schalters 1 gemäß Anspruch 10, wobei der Schalter 1 durch eine Berührung der Schalteroberfläche mit Antippcharakter die An-Aus-Schaltwirkung und/oder durch eine Berührung der Schalteroberfläche mit Streichcharakter eine Dauersignalwirkung bereitzustellen in der Lage ist.

12. Verfahren zum Betätigen eines Schalters 1 gemäß Anspruch 11, wobei der Schalter 1 jeder dieser Antippdauern und/oder Antippfolgen die Schaltung eines anderen Verbrauchers und/oder Gruppe von Verbrauchern zuzuordnen in der Lage ist, wobei der Schalter 1 bei der Berührung der Schalteroberfläche mit Antippcharakter unterschiedliche Antippdauern und/oder Antippfolgen zu identifizieren und in der Lage ist.

13. Verfahren zum Betätigen eines Schalters 1 gemäß eines der Ansprüche 10 bis 12, wobei der Schalter 1 bei der Berührung der Schalteroberfläche mit Streichcharakter unterschiedliche Streichrichtungen und/oder Streichsymbole zu identifizieren und in der Lage ist und jeder dieser Streichrichtungen und/oder Symbole die Auswahl einer Gruppe von Verbrauchern und/oder innerhalb einer solchen Gruppe einer Untergruppe, bzw. eines einzelnen Verbrauchers und/oder bei einem einzelnen Verbraucher dessen Funktionen und/oder bei einer dieser Funktionen eines Verbrauchers die mit Hilfe der menschlichen Sinne vernehmbare Intensität der Wirkung dieses Verbrauchers in der Lage ist zuzuordnen.

14. Verfahren zum Betätigen eines Schalters 1 gemäß einem der zuvor genannten Ansprüche, wobei in einem weiteren Verfahrensschritt die Gruppe von Verbrauchern auswählbar ist, die geschalten werden soll.

15. Verfahren zum Betätigen eines Schalters 1 gemäß Anspruch 14 indem die Auswahl durch Betätigen eines räumlich definierten Bereichs des Schalters 1, hinter dem die gewünschte Gruppe von Verbrauchern hinterlegt ist, geschieht, und/oder durch Eingabe einer vordefinierten Impulsfolge, der die betreffende Gruppe von Verbrauchern zugeordnet ist, und/oder durch Eingabe einer Streichbewegung an einer berührungssensitiven Oberfläche des Schalters 1, der die betreffende Gruppe von Verbrauchern zugeordnet ist, und/oder durch Eingabe eines vordefinierten Symbols, an einer berührungssensitiven Oberfläche des Schalters 1, dem die betreffende Gruppe von Verbrauchern zugeordnet ist, und/oder durch Auswahl der betreffenden Gruppe von Verbrauchern, aus Vorschlägen, die der Schalter 1 unterbreitet.

16. Verfahren zum Betätigen eines Schalters 1 gemäß einem der zuvor genannten Ansprüche, wobei in einem weiteren Verfahrensschritt eine Gruppe von Verbrauchern geschalten, insbesondere eingeschalten werden kann.

17. Verfahren zum Betätigen eines Schalters 1 gemäß Anspruch 16, wobei in einem weiteren Verfahrensschritt innerhalb der geschaltenen, insbesondere eingeschalteten Gruppe von Verbrauchern die dieser Gruppe zugeordneten Verbraucher einzeln auswählbar sind.

18. Verfahren zum Betätigen eines Schalters 1 gemäß eines der Ansprüche 13 bis 15, wobei in einem weiteren Verfahrensschritt die durch die menschlichen Sinne wahrnehmbare Intensität des bzw. der Verbraucher geändert werden kann.

19. Verfahren zum Betätigen eines Schalters 1 gemäß Anspruch 18, wobei in einem weiteren Verfahrensschritt die durch die menschlichen Sinne wahrnehmbare Intensität des bzw. der Verbraucher noch weiter geändert werden kann, indem weitere gleichwirkende Verbraucher für eine weitere Intensitätszunahme hinzugeschalten bzw. für eine weitere Intensitätsabnahme abgeschalten werden.

20. Verfahren zum Betätigen eines Schalters 1 gemäß einem der zuvor genannten Ansprüche, wobei in einem weiteren Verfahrensschritt all diejenigen Verbraucher der Gruppe ausgeschaltet werden, die zu dieser Gruppe von Verbrauchern zuvor lokal hinzugeschalten wurden.

21. Verfahren zum Betätigen eines Schalters 1 gemäß eines der zuvor genannten Ansprüche, wobei in einem weiteren Verfahrensschritt alle Verbraucher des Raumes in den Stand-by-Modus geschalten werden.

22. Verfahren zum Betätigen eines Schalters 1 gemäß eines der zuvor genannten Ansprüche, wobei in einem weiteren Verfahrensschritt alle Verbraucher des Raumes bzw. der Verwaltungseinheit ausgeschaltet werden.

23. Verfahren zum Betätigen eines Schalters 1 gemäß eines der Ansprüche 12 bis 22, wobei der Bediener des Schalters 1 in jedem der durch die Ansprüche 12 bis 22 repräsentierten Verfahrensschritte mit Hilfe einer weiteren Eingabemöglichkeit dieses Schalters 1 zum Verfahrensschritt eines der Ansprüche 14 bis 16, insbesondere des Anspruchs 16, gelangt.

24. Verfahren zum Betätigen eines Schalters 1 gemäß Anspruch 23, wobei bei einem mehreckigen Schalter eine untere rechte Ecke geeignet ist, in dem weiteren Verfahrensschritt des Anspruchs 16 unmittelbar die nächstfolgende Gruppe von Verbrauchern auswählbar zu machen und/oder eine untere linke Ecke geeignet ist, in dem weiteren Verfahrensschritt des Anspruchs 16 unmittelbar die vorhergehende Gruppe von Verbrauchern auswählbar zu machen.

25. Verfahren zum Betätigen eines Schalters 1 gemäß einem der zuvor genannten Ansprüche, wobei die mindestens eine Betätigungsfläche 4 vom Schaltelement 3 trennbar angeordnet ist und in getrenntem Zustand mit diesem mit Hilfe von Fernkommunikationsmitteln 5 zu kommunizieren in der Lage ist.

26. Verfahren zum Betätigen eines Schalters 1 gemäß Anspruch 25 umfassend mindestens eine vom Schaltelement 3 trennbar angeordnete Betätigungsfläche 4, mindestens einen Zwischenspeicher 6, wobei in jedem Zwischenspeicher 6 Kommunikationsinformationen für mehr als ein zu steuernden Schalter 1, und/oder ein zu steuerndes Hausgerät hinterlegt werden können, wobei sich Betätigungsfläche 4 und Zwischenspeicher 6 und Schaltelement 3 nicht im selben Gehäuse befinden.

27. Verfahren zum Betätigen eines Schalters 1 gemäß eines der Ansprüche 25 und 26, wobei sich der Zwischenspeicher 6 auch nicht im Gehäuse des zu steuernden Geräts befindet.

28. Verfahren zum Betätigen eines Schalter 1 gemäß eines der Ansprüche 25 bis 27, wobei durch den Zwischenspeicher 6 eine Verwaltungseinheit definiert werden kann.

29. Verfahren zum Betätigen eines Schalters 1 gemäß eines der Ansprüche 25 bis 28, wobei die Kommunikation zwischen Schalter 1 und Betätigungsfläche 4 mit Hilfe des Zwischenspeichers 6 und mit Hilfe von Fernkommunikationsmitteln 5 abgewickelt wird.

30. Verfahren zum Betätigen eines Schalters 1 gemäß eines der Ansprüche 25 bis 29, wobei die Betätigungsfläche 4 durch einen Personal Digital Assistent bereitgestellt wird.

31. Verfahren zum Betätigen eines Schalter 1 gemäß eines der Ansprüche 25 bis 30, wobei jeder Verwaltungseinheit ein lokaler Zwischenspeicher 6 zugeordnet ist, der Steuerungskommandos der Verwaltungseinheit enthalten kann.

32. Verfahren zum Betätigen eines Schalter 1 gemäß eines der Ansprüche 25 bis 31, wobei die An- und Abmeldung einer mobilen Betätigungsfläche 4 nach Identifizierung des Nutzers bei der lokalen Betätigungsfläche 4 mittels eines Codes und/oder durch Tastendruck und/oder durch Stimmerkennung und/oder eine andere Zutrittshürde erfolgt.

33. Verfahren zum Betätigen eines Schalter 1 gemäß eines der Ansprüche 25 bis 32, wobei die Hausgeräte bzw. Schalter 1 Daten zu deren Steuerung bereitstellen.

34. Verfahren zum Betätigen eines Schalter 1 gemäß eines der Ansprüche 25. bis 33, wobei sich der Zwischenspeicher 6 selbständig die Daten der Hausgeräte bzw. Schalter 1 zu deren Steuerung einliest.

35. Verfahren zum Betätigen eines Schalter 1 gemäß eines der Ansprüche 25 bis 34, wobei das Einlesen nur erfolgt, wenn ein zuvor definierbarer Abstand zum Hausgerät bzw. Schalter unterschritten wurde.

36. Verfahren zum Betätigen eines Schalters 1 gemäß einem der zuvor genannten Ansprüche, wobei bei einer Nichtbetätigung des Schalters 1 von länger als einer vordefinierten Zeitraum automatisch der Grundzustand wiederhergestellt wird.

37. Verfahren zum Betätigen eines Schalters 1 gemäß Anspruch 36 wobei die Zeitraum mehr als 30 Sekunden beträgt.

38. Verfahren zum Betätigen eines Schalters 1 gemäß einem der zuvor genannten Ansprüche, wobei in einem weiteren Verfahrensschritt alle Verbraucher der Gruppe ausgeschaltet werden.

## Claims

1. Method to actuate a switch 1, whereby said switch comprises at least one movable switch element 3 which is movable vis-a-vis a base element, whereby said switch 1 comprises said base element 2 particularly in a flush-mounted socket and/or comprises at least one switch element 3 which is static vis-a-vis said base element 2 whereby said switch element 2 is capable to send out at least one long term switch signal and whereby the characteristics as well as the effects of said at least one long term switch signal are definable by the person actuating said switch 1 entering by said first method step into a programming mode and in said programming mode said actuating person is capable to define in a first step at least one of said permanent switch signals freely, its duration, its shape respectively of said signal is definable freely, whereby after said definition in a further step said signal is allocated to at least one electric appliance or to a group of electric appliances.

2. Method to actuate a switch according to claim 1, whereby the impulse and/or the permanent switch signal are set up during the programming mode, by defining said switch impulse as a freely creatable period of a first temporal spacing, and by defining as said permanent switch signal a freely creatable period of a second temporal spacing and by defining the maximum of a break between those two.

3. Method to actuate a switch 1 according to one of the previous claims, whereby periods up to of around 800ms are interpreted as said first period and whereby longer periods than said first period are interpreted as a second period.

4. Method to actuate a switch 1 according to one of the previous claims, whereby a threshold is definable as a minimum of a time limit which then is the starting point from which on periods below said up to around 800ms are interpreted as said first temporal spacing and whereby periods longer than that are interpreted as permanent signals.

5. Method to actuate a switch according to claim 4, whereby periods below said threshold are interpreted as a third temporal spacing.

6. Method to actuate a switch 1 according to claim 5, whereby said threshold in general lies around 100ms.

7. Method to actuate a switch 1 according to one of the previous claims, whereby the period of a break is lower than about one second.

8. Method to actuate a switch 1 according to one of the previous claims, whereby periods beyond said definable of said breakperiod are interpreted as a command that an input is trerminated.

9. Method to actuate a switch 1 according to claim 7, whereby the period of a break lies around 80 to 150ms.

10. Method to actuate a switch 1 according to one of the previous claims, whereby Said switch 1 comprises at least one touch-sensitive surface, whereby said touch-sensitive surface in said switch 1 is capable to provide an on/of effect of said switch and/or the effect of said permanent signal.

11. Method to actuate a switch according to claim 10, whereby said switch 1 is capable to provide said on/off switch-effect just by typing on said surface and/or is capable to provide said permanent signal-effect just by a touching movement on the surface of said surface

12. Method to actuate a switch 1 according to claim 11, device whereby said switch 1 is capable to allocate each of said type-periods and/or said type-sequences to switch an electric load or a group of electric loads, whereby said switch 1 is capable to identify various type-periods and/or type-sequences, when said switch-surface comprising said touch- characteristic is touched

13. Method to actuate a switch 1 according to one of the previous claims 10 to 12, whereby said switch 1 is capable to identify a variety of moving-touch directions and/or moving touch symbols in case that its when its moving-touch-surface is touched and is capable to allocate to each of said moving-touch directions and/or symbols the selection of a group of electric loads and/or within such a group a sub-group or a single electric load and/or within said device its functions and/or within said functions of a device the effect said device provides and human sensuality is cable to recognize.

14. Method to actuate a switch 1 according to one of the previous claims, whereby in a further method step the group of electric loads is selectable which is supposed to be switched.

15. Method to actuate a switch according to claim 14 whereby said selection is operated by actuating a defined area of said switch 1 to which the requested group of electric loads is allocated and/or to which the input of a previously defined sequence of impulses is allocated and/or by the input of a moving touch movement on a touch sensitive surface of said switch 1 whereby the respectice group of electric loads is allocated to said switch 1 and/or by inputting a previously defined symbol into said touch sensitive surface of switch 1, to which the respective group of electric loads is allocated and/or by selecting the respective group of electric loads out of examples said switch provides

16. Method to actuate a switch 1 according to one of the previous claims, whereby in a further method step a group of electric loads can be switched.

17. Method to actuate a switch according to claim 16, whereby in a further method step within said switched, particularly group of-, electric loads each of said electric loads, which is allocated to said group, can be selected individually.

18. Method to actuate a switch 1 according to one of the claims 14 to 18, whereby in a further method step said intensity recognizable by human sensuality of the one or more electric loads is changable.

19. Method to actuate a switch 1 according to claim 18, whereby, in a further method step said intensity of an electric load, recognizable by human sensuality can be changed by adding additional electric loads of the same type in order to enhance said intensity, or by switching additional electric loads off in order to decrease said intensity.

20. Method to actuate a switch 1 according to one of the previous claims, whereby in a further method step all those electric loads of a group can be switched off, wich were previously added to said group of electric loads locally.

21. Method to actuate a switch 1 according to one of the previous claims, whereby in a further method step all the electric loads of a room can be witched in the stand-by-mode.

22. Method to actuate a switch 1 according to one of the previous claims, whereby in a further method step all electric loads of a room or of said operation unit can be switched off.

23. Method to actuate a switch 1 according to one of the claims 12 to 22, whereby the person actuating said switch 1 can proceed in each individual of the method steps represented by one of the claims 12 to 22 from one of the method steps represented by one of the claims 12 to 22 to one of the method steps represented by one of the claims 14 to 16, particularly to claim 16, by help of one additional input into said switch only.

24. Method to actuate a switch according to claim 23, whereby a lower right corner of a switch comprising a plurality of corners is capable to make the next group of electric loads instantly selectable in a further method step of claim 16 and/or a lower left corner of a switch comprising a plurality of corners is capable to make the previously group of electric loads instantly selectable in a further method step of claim 16

25. Method to actuate a switch 1 according to one of the previous claims, whereby the at least one sensing area 4 of switch element 3 is allocated such that it can be physically separated and in case that it is separated, is capable to communicate by hep of a communication device for long distance services.

26. Method to actuate a switch according to claim 25 comprising at least one sensing area 4 which can be separated from switch element 3, at least one buffer store 6, whereby in said buffer store 6 communication information for more than one switch 1 and/or household appliances to be controlled can be stored, whereby said sensing area 4 and said buffer store 6 and said switch unit 3 are not comprised in the same housing.

27. Method to actuate a switch 1 according to one of the claims 25 and 26, whereby said buffer store 6 is not also inside in the housing of the device to be controlled.

28. Method to actuate a switch 1 according to one of the claims 25 to 27, whereby an operation unit can be defined by said buffer store 6.

29. Method to actuate a switch 1 according to one of the claims 25 to 28, whereby the communication between switch 1 and sensing area 4 is executed by help of the buffer store 6 and by help of communication devices for long distance services 5.

30. Method to actuate a switch 1 according to one of the claims 25 to 29, whereby said sensing area 4 is provided by a personal digital assistant.

31. Method to actuate a switch 1 according to one of the claims 25 to 30, whereby a buffer store 6 can be allocated to each operation unit, which can comprise control commands of said operation unit.

32. Method to actuate a switch 1 according to one of the claims 25 to 31, whereby the log in / log out procedure of a mobile sensing area 4 takes place after the user has identified himself at the local sensing area 4 by a code and/or by a keystroke, and/or by voice detection, and/or by any other access control.

33. Method to actuate a switch 1 according to one of the claims 25 to 32, whereby data to control said household appliance is provided by said household appliances.

34. Method to actuate a switch 1 according to one of the claims 25 to 33, whereby the input of data into said buffer store 6 to control said household appliances or switches 1 is automatized.

35. Method to actuate a switch 1 according to one of the claims 25 to 34, whereby said input only occurs in cases in which the distance between said switch and said household appliance is below a previously defined distance.

36. Method to actuate a switch 1 according to one of the previous claims, whereby in case that said switch 1 is not actuated for a period longer than previously defined, the initial state of said switch is reactivated automatically.

37. Method to actuate a switch 1 according claim 36, whereby said period takes longer than 30 seconds.

38. Method to actuate a switch 1 according to one of the previous claims, whereby in a further method step all electric loads of a group are switched off.

## Revendications

1. Procédé de commande d'un commutateur 1 qui comprend au moins un élément de commutation 3 déplaçable par rapport à un élément de base 2 apte à être reçu en particulier dans une boîte encastrée, et/ou au moins un élément de commutation 3 stationnaire par rapport à cet élément de base 2, ledit élément de commutation 3 étant apte à fournir au moins un signal continu de commutation, **caractérisé en ce que** les caractéristiques ainsi que les effets de cet au moins un signal continu de commutation peuvent être définis librement par l'opérateur du commutateur 1 dans une première étape du procédé par le fait que, dans cette première étape de procédé, l'opérateur entre d'abord dans le mode de programmation et définit dans ce mode de programmation, dans un premier temps, au moins un tel signal continu de commutation dont la durée ou bien la configuration peut être définie librement par l'opérateur du commutateur ; après cette définition, ce signal étant associé, dans une autre étape, à au moins un seul appareil consommateur et/ou à au moins un groupe d'appareils consommateurs.

2. Procédé de commande d'un commutateur 1 selon la revendication 1, dans lequel l'impulsion et/ou ledit signal continu de commutation sont définis dans le mode de programmation en déterminant l'impulsion de commutation par une longueur librement définissable d'un premier intervalle de temps et en déterminant le signal continu de commutation par une longueur librement définissable d'un second intervalle de temps et en déterminant la longueur maximale de la pause entre ceux-ci.

3. Procédé de commande d'un commutateur selon l'une quelconque des revendications précédentes, dans lequel des durées allant jusqu'à 800 millisecondes environ sont interprétées comme premier intervalle de temps et les durées supérieures à ces premières sont interprétées comme signal continu.

4. Procédé de commande d'un commutateur 1 selon l'une quelconque des revendications précédentes, dans lequel une valeur de seuil peut être définie comme limite temporelle inférieure à partir de laquelle une durée de temps allant jusqu'à 800 millisecondes environ est interprétée comme premier intervalle de temps, et dans lequel les temps allant au-delà sont interprétés comme signal continu.

5. Procédé de commande d'un commutateur 1 selon la revendication 4, dans lequel des durées en dessous de cette valeur de seuil sont interprétées comme troisième intervalle de temps.

6. Procédé de commande d'un commutateur 1 selon la revendication 5, dans lequel ladite valeur de seuil se situe pour l'essentiel à 100 millisecondes.

7. Procédé de commande d'un commutateur 1 selon l'une quelconque des revendications précédentes, dans lequel la durée d'une pause est inférieure à, pour l'essentiel, une seconde.

8. Procédé de commande d'un commutateur 1 selon l'une quelconque des revendications précédentes, dans lequel des durées au-dessus des durées de pause définies sont interprétées comme ordre indiquant que l'entrée est terminée.

9. Procédé de commande d'un commutateur 1 selon la revendication 7, dans lequel la durée de la pause est comprise entre 80 et 150 millisecondes.

10. Procédé de commande d'un commutateur 1 selon l'une quelconque des revendications précédentes, dans lequel ledit commutateur 1 comprend au moins une surface sensitive au toucher, cette surface sensitive au toucher dans ledit commutateur 1 étant apte à mettre à disposition un effet de commutation on/off et/ou un effet de signal continu.

11. Procédé de commande d'un commutateur 1 selon la revendication 10, dans lequel ledit commutateur 1 est apte à mettre à disposition ledit effet de commutation on/off par un contact à caractère d'attouchement de la surface du commutateur et/ou un effet de signal continu par un contact à caractère d'effleurement de la surface du commutateur.

12. Procédé de commande d'un commutateur 1 selon la revendication 11, dans lequel ledit commutateur 1 est apte à associer à chacune de ces durées d'attouchement et/ou suites d'attouchement la commutation d'un autre appareil consommateur et/ou groupe d'appareils consommateurs, ledit commutateur 1 étant apte à identifier, lors d'un contact à caractère d'attouchement de la surface du commutateur, des durées d'attouchement et/ou suites d'attouchement différentes.

13. Procédé de commande d'un commutateur 1 selon l'une quelconque des revendications 10 à 12, dans lequel ledit commutateur 1, lors d'un contact à caractère d'effleurement de la surface du commutateur, est apte à identifier des directions d'effleurement différentes et/ou des symboles d'effleurement différents et est apte à associer à chacun(e) de ces directions d'effleurement et/ou de ces symboles le choix d'un groupe d'appareils consommateurs et/ou, parmi un tel groupe, d'un sous-groupe, ou bien d'un appareil consommateur individuel et/ou, dans le cas d'un appareil consommateur individuel, des fonctions de celui-ci et/ou, dans une de ces fonctions d'un appareil consommateur, l'intensité de l'effet de cet appareil consommateur, qui est apercevable à l'aide des sens humains.

14. Procédé de commande d'un commutateur 1 selon l'une quelconque des revendications précédentes, dans lequel, dans une autre étape du procédé, on peut choisir le groupe d'appareils consommateurs qui doit être commuté.

15. Procédé de commande d'un commutateur 1 selon la revendication 14, en réalisant le choix par une commande d'une zone du commutateur 1 qui est définie dans l'espace et où le groupe désiré d'appareils consommateurs est enregistré, et/ou par une entrée d'une suite d'impulsions prédéfinie à laquelle le groupe respectif d'appareils consommateurs est associé, et/ou par une entrée d'un mouvement d'effleurement sur une surface sensitive au toucher dudit commutateur 1, auquel le groupe respectif d'appareils consommateurs est associé, et/ou par une entrée d'un symbole prédéfini sur une surface sensitive au toucher du commutateur 1, auquel le groupe respectif d'appareils consommateurs est associé, et/ou par un choix du groupe respectif d'appareils consommateurs parmi des propositions offertes par ledit commutateur 1.

16. Procédé de commande d'un commutateur 1 selon l'une quelconque des revendications précédentes, dans lequel, dans une autre étape du procédé, un groupe d'appareils consommateurs peut être commuté, en particulier allumé.

17. Procédé de commande d'un commutateur 1 selon la revendication 16, dans lequel, dans une autre étape du procédé, on peut choisir individuellement parmi le groupe commuté, en particulier allumé, d'appareils consommateurs les appareils consommateurs associés à ce groupe.

18. Procédé de commande d'un commutateur 1 selon l'une quelconque des revendications 14 à 15, dans lequel, dans une autre étape du procédé, on peut varier l'intensité du ou bien des appareil(s) consommateur(s), apercevable par les sens humains.

19. Procédé de commande d'un commutateur 1 selon la revendication 18, dans lequel, dans une autre étape du procédé, on peut varier une nouvelle fois l'intensité du ou bien des appareil(s) consommateur(s), apercevable par les sens humains, et ceci par le fait que d'autres appareils consommateurs à effet égal sont ajoutés pour une autre augmentation de l'intensité ou bien sont éteints pour une autre réduction de l'intensité.

20. Procédé de commande d'un commutateur 1 selon l'une quelconque des revendications précédentes, dans lequel, dans une autre étape du procédé, tous ceux des appareils consommateurs du groupe qui ont été ajoutés localement auparavant à ce groupe d'appareils consommateurs sont éteints.

21. Procédé de commande d'un commutateur 1 selon l'une quelconque des revendications précédentes, dans lequel, dans une autre étape du procédé, tous les appareils consommateurs du local sont commutés en mode d'attente.

22. Procédé de commande d'un commutateur 1 selon l'une quelconque des revendications précédentes, dans lequel, dans une autre étape du procédé, tous les appareils consommateurs du local ou bien de l'unité de gestion sont éteints.

23. Procédé de commande d'un commutateur 1 selon l'une quelconque des revendications 12 à 22, dans lequel l'opérateur du commutateur 1 atteint dans chacune des étapes du procédé représentées par les revendications 12 à 22, à l'aide d'une autre possibilité d'entrée de ce commutateur 1, l'étape de procédé de l'une des revendications 14 à 16, en particulier de la revendication 16.

24. Procédé de commande d'un commutateur 1 selon la revendication 23, dans lequel, dans le cas d'un commutateur polygonal, un angle inférieur droit est apte à faire sélectionnable, dans l'autre étape du procédé de la revendication 16, immédiatement le groupe suivant d'appareils consommateurs, et/ou un angle inférieur gauche est apte à faire sélectionnable, dans l'autre étape du procédé de la revendication 16, directement le groupe précédent d'appareils consommateurs.

25. Procédé de commande d'un commutateur 1 selon l'une quelconque des revendications précédentes, dans lequel ladite au moins une surface de commande 4 est disposée de manière à pouvoir être séparée de l'élément de commutation 3 et est apte à communiquer, à l'état séparé, avec celui-ci à l'aide de moyens de communication à distance 5.

26. Procédé de commande d'un commutateur 1 selon la revendication 25, comprenant au moins une surface de commande 4 disposée de manière à pouvoir être séparée de l'élément de commutation 3, au moins une mémoire intermédiaire 6, dans chaque mémoire intermédiaire 6 peuvent être déposées des informations de communication pour plus d'un commutateur 1 à commander et/ou un appareil électroménager à commander, ladite surface de commande 4 et la mémoire intermédiaire 6 et ledit élément de commutation 3 ne sont pas situés dans le même boîtier.

27. Procédé de commande d'un commutateur 1 selon l'une quelconque des revendications 25 et 26, dans lequel ladite mémoire intermédiaire 6 ne se trouve, elle, non plus dans le boîtier de l'appareil à commander.

28. Procédé de commande d'un commutateur 1 selon l'une quelconque des revendications 25 à 27, dans lequel une unité de gestion peut être définie par ladite mémoire intermédiaire 6.

29. Procédé de commande d'un commutateur 1 selon l'une quelconque des revendications 25 à 28, dans lequel la communication entre ledit commutateur 1 et ladite surface de commande 4 peut être réalisée à l'aide de la mémoire intermédiaire 6 et à l'aide de moyens de communication à distance 5.

30. Procédé de commande d'un commutateur 1 selon l'une quelconque des revendications 25 à 29, dans lequel ladite surface de commande 4 est mise à disposition par un assistant numérique personnel.

31. Procédé de commande d'un commutateur 1 selon l'une quelconque des revendications 25 à 30, dans lequel à chaque unité de gestion est associée une mémoire intermédiaire locale 6 qui peut contenir des ordres de commande de ladite unité de gestion.

32. Procédé de commande d'un commutateur 1 selon l'une quelconque des revendications 25 à 31, dans lequel la demande de connexion et la déconnexion d'une surface mobile de commande 4 se fait après l'identification de l'utilisateur sur ladite surface locale de commande 4 au moyen d'un code et/ou par la pression d'une touche et/ou par une identification de voix et/ou par une autre entrave d'accès.

33. Procédé de commande d'un commutateur 1 selon l'une quelconque des revendications 25 à 32, dans lequel les appareils électroménagers ou bien les commutateurs 1 fournissent des données pour leur commande.

34. Procédé de commande d'un commutateur 1 selon l'une quelconque des revendications 25 à 33, dans lequel ladite mémoire intermédiaire 6 mémorise elle-même les données des appareils électroménagers ou bien des commutateurs 1 pour leur commande.

35. Procédé de commande d'un commutateur 1 selon l'une quelconque des revendications 25 à 34, dans lequel ladite mise en mémoire n'a lieu que lorsqu'on est resté en dessous d'une distance prédéfinissable par rapport à l'appareil électroménager ou bien au commutateur.

36. Procédé de commande d'un commutateur 1 selon l'une quelconque des revendications précédentes, dans lequel, lorsque le commutateur 1 n'est pas commandé pendant une durée supérieure à une durée définie auparavant, l'état de base est automatiquement rétabli.

37. Procédé de commande d'un commutateur 1 selon la revendication 36, dans lequel ladite durée est de plus de 30 secondes.

38. Procédé de commande d'un commutateur 1 selon l'une quelconque des revendications précédentes, dans lequel, dans une autre étape du procédé, l'ensemble des appareils consommateurs du groupe est éteint.
